(19) **Europäisches Patentamt / European Patent Office / Office européen des brevets**

(11) **EP 4 741 084 A1**

(12) # EUROPEAN PATENT APPLICATION

(43) Date of publication:
**13.05.2026 Bulletin 2026/20**

(21) Application number: **25215362.2**

(22) Date of filing: **12.11.2025**

(51) International Patent Classification (IPC):
*B22F 10/28* (2021.01)   *B22F 10/38* (2021.01)
*B22F 10/85* (2021.01)   *B22F 12/41* (2021.01)
*B22F 12/90* (2021.01)   *B33Y 10/00* (2015.01)
*B33Y 30/00* (2015.01)   *B33Y 50/02* (2015.01)
*G06T 7/00* (2017.01)   *G06T 7/174* (2017.01)
*G06T 7/507* (2017.01)   *B33Y 80/00* (2015.01)
*B29C 64/153* (2017.01)   *B29C 64/393* (2017.01)
*B22F 10/80* (2021.01)

(52) Cooperative Patent Classification (CPC):
(C-Sets available)
**B22F 10/85; B22F 10/28; B22F 10/38; B22F 12/41;
B22F 12/90; B33Y 10/00; B33Y 30/00; B33Y 50/02;
G06T 7/0002; G06T 7/0008; G06T 7/174;
G06T 7/507;** B22F 10/80                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024 JP 2024197759**

(71) Applicant: **Jeol Ltd.**
**Akishima, Tokyo 196-8558 (JP)**

(72) Inventors:
• **TSUTAGAWA, Nari**
  **Tokyo, 196-8558 (JP)**
• **KANEKO, Yuhei**
  **Tokyo, 196-8558 (JP)**
• **ASANUMA, Yuji**
  **Tokyo, 196-8558 (JP)**
• **TSUDA, Takashi**
  **Tokyo, 196-8558 (JP)**
• **SUWA, Kento**
  **Tokyo, 196-8558 (JP)**
• **OHARA, Shuma**
  **Tokyo, 196-8558 (JP)**
• **SHIBATA, Kohei**
  **Tokyo, 196-8558 (JP)**

(74) Representative: **Boult Wade Tennant LLP**
**Salisbury Square House**
**8 Salisbury Square**
**London EC4Y 8AP (GB)**

(54) **INFORMATION PROCESSING APPARATUS, DEFECT DETECTION METHOD, AND THREE-DIMENSIONAL POWDER BED FUSION ADDITIVE MANUFACTURING APPARATUS**

(57) An information processing apparatus (54) includes: a defect candidate specifying unit (72) that specifies a plurality of defect candidates that are located at substantially same positions in a plurality of layers that are adjacent in a stacking direction; a defect detection unit (73) that detects defects remaining in shaped objects on the basis of sizes of the plurality of defect candidates, which are located at substantially the same positions and are specified in the plurality of layers, in the stacking direction and sizes inside the layers; and a shaping control unit (71) that performs control to stop at least PBF-AM of shaped objects, from which the defects have been detected, or output a warning in a case where the sizes of the defects exceed a preset threshold value in the middle of the PBF-AM.

FIG. 1

**(Cont. next page)**

# FIG. 15

z DIRECTION

x DIRECTION

N+7-TH LAYER

N+6-TH LAYER

N+5-TH LAYER

N+4-TH LAYER

N+3-TH LAYER

N+2-TH LAYER

N+1-TH LAYER

N-TH LAYER

ID4 ID2 ID3 ID1

Lz4 Lz2 Lz3 Lz1

Lx4 Lx3 Lx2 Lx1

START
SHAPING CONTROL PROCESSING

S41

RAISE TEMPERATURE OF SHAPING PLATE

S42

PERFORM RECOATING

S43

PERFORM POWDER-HEAT (P.H.)

*FIG. 19*

S44A

PERFORM MELTING

SHAPED OBJECTS IN WHICH DEFECT STATES
EXCEED THRESHOLD VALUE ARE NOT MELTED

SHAPED OBJECTS IN WHICH DEFECT STATES
DO NOT EXCEED THRESHOLD VALUE ARE MELTED

S45

ACQUIRE BSE IMAGE

S46

PERFORM AFTER-HEAT (A.H.)

S48

PERFORM DEFECT
DETECTION PROCESSING

S47

LOWER SHAPING PLATE
BY AMOUNT CORRESPONDING
TO ONE LAYER IN Z DIRECTION

S49

HAVE DETECTED
DEFECTS EXCEEDED
THRESHOLD VALUE?

YES

S51A

STOP SHAPING OF SHAPED OBJECTS
IN WHICH DEFECT STATES EXCEED
THRESHOLD VALUE AND CONTINUE
SHAPING OF SHAPED OBJECTS IN
WHICH DEFECT STATES DO NOT
EXCEED THRESHOLD VALUE

NO

S50

NO

HAS SHAPING
UP TO LAST LAYER BEEN
PERFORMED?

YES

END
(COMPLETE SHAPING)

3

(Cont. next page)

FIG. 22

(52) Cooperative Patent Classification (CPC): (Cont.)

C-Sets
B22F 2999/00, B22F 10/80, B22F 12/90,
B22F 2203/01;
B22F 2999/00, B22F 10/80, B22F 12/90,
B22F 2203/03;
B22F 2999/00, B22F 12/90, B22F 10/38;
B22F 2999/00, B22F 12/90, B22F 2203/01;
B22F 2999/00, B22F 12/90, B22F 2203/03

**Description**

BACKGROUND

Technical Field

The present invention relates to an information processing apparatus, a defect detection method, and a three-dimensional powder bed fusion additive manufacturing (PBF-AM) apparatus.

Related Art

In recent years, a three-dimensional powder bed fusion additive manufacturing (PBF-AM) technique in which layers obtained by thinly spreading a powder material of metal are layered one by one and are shaped has been in the limelight, and many types of three-dimensional PBF-AM techniques have been developed depending on differences in materials for the powder material and shaping methods.

In a shaping method of a three-dimensional PBF-AM apparatus in the related art, a powder material is spread for each layer on a base plate placed on an upper surface of a stage, for example. Next, only a two-dimensional structural portion corresponding to one section of a shaped object of the powder material spread on the base plate is melted by a heating mechanism using an electron beam or a laser. Then, such layers of powder material are stacked one by one in the height direction (Z direction) to thereby form a shaped object. At the time of shaping each layer of the shaped object, a powder bed is formed on the base plate, and this shaping method is thus also referred to as a powder bed method.

In the formation of the shaped object, the powder material cannot be completely melted at a part where a sintering failure has occurred, and irregularities occur on the surface of the shaped object in the middle of shaping. Since such irregularities may be defects, the three-dimensional PBF-AM apparatus performs defect detection on the basis of data acquired from the surface of the shaped object by performing camera imaging or back scattered electron (BSE) imaging. The camera imaging is, for example, a method of imaging the surface of the shaped object with visible light. The BSE imaging is a method of imaging the surface of the shaped object by detecting backscattered electrons of an electron beam with which the surface of the shaped object is irradiated.

Layer data obtained by the camera imaging or the BSE imaging is displayed on a monitor as an XY sectional view per layer of the shaped object in the middle of the shaping. A user can check a state of the XY section immediately after the powder material is melted using the layer data. Furthermore, the user can also specify a location that may become a defect (referred to as a defect candidate) on the basis of the irregularities on the surface of the shaped object in the middle of the shaping. Examples of the defect candidate include an irregular part generated in the layers and a part insufficiently melted and having a space formed therein.

As a technique related to such defect detection, a technique disclosed in Patent Literature 1 is known. Patent Literature 1 describes that "a determination unit calculates the height of a protrusion and at least either the total area of a region where the protrusion has been generated or the occupation ratio of the protrusion in a sintered region from a state of the protrusion measured by a surface state measurement unit and compares the calculated value with a corresponding threshold value to determine whether or not a shaped state of a sintered layer is satisfactory."

Citation List

Patent Literature

Patent Literature 1: JP 2020-200501 A

SUMMARY

Even if the user can check the state of the XY section immediately after the melting for each layer using the defect detection function in the related art as described above, it is difficult for the user to visually check states of all the layers since PBF-AM for several hundreds to several thousands of layers is performed to complete a shaped object. Information necessary for defect detection cannot be obtained unless the shaped object is inspected by another measurement apparatus (for example, an apparatus using X-ray computed tomography (CT)) after the PBF-AM is completed. For this reason, it is not possible to know, until the PBF-AM is completed, whether or not a problematic defect has occurred during the PBF-AM. Also, the position of the defect, for example, is also not known as defect information according to the defect detection function in the related art.

Under circumstances as described above, it has not been possible to prevent in advance a case where it is found that there is a problem in quality of a shaped object after the PBF-AM is performed over many days and the shaping is completed. In a case where a problem occurs in quality after completion of shaping, the user may lose great time and cost in the production process of the shaped object.

The present invention has been made in view of such a situation, and an object thereof is to prevent a great loss of time and cost in a production process of a shaped object in advance.

An information processing apparatus according to the present invention includes: a defect candidate specifying unit that detects failure locations having occurred in layers, by which PBF-AM of shaped objects is performed, as defect candidates for each of the layers and specifies a plurality of defect candidates that are located at substantially same positions in a plurality of layers that are adjacent in a stacking direction on the basis of layer data obtained for each of the layers; a defect detection unit that detects defects remaining in shaped objects on the basis of sizes of the plurality of defect candidates, which are located at substantially the same positions in the plurality of layers and are specified in the plurality of layers, in the stacking direction and sizes inside the layers; and a shaping control unit that performs control to stop at least PBF-AM of shaped objects, from which the defects have been detected, or output a warning in a case where the sizes of the defects exceed a preset threshold value in the middle of the PBF-AM.

Note that the above-mentioned information processing apparatus is one aspect of the present invention, and a defect detection method and a three-dimensional PBF-AM apparatus reflecting the aspect of the present invention are also configured similarly to the above-mentioned information processing apparatus.

According to the present invention, at least stopping or warning of PBF-AM of a shaped object in which a defect has occurred is executed in a case where occurrence of a problematic defect is observed in the shaped object in the middle of the PBF-AM processing, and it is thus possible to prevent a great loss of time and cost in a production process of the shaped object in advance.

Problems, configurations, and effects other than those described above will be clarified by the following description of embodiments.

BRIEF DESCRIPTION OF DRAWINGS

FIG. 1 is a schematic sectional view schematically illustrating a three-dimensional PBF-AM apparatus according to a first embodiment of the present invention;

FIG. 2 is a block diagram illustrating a configuration example of a control system of the three-dimensional PBF-AM apparatus according to the first embodiment of the present invention;

FIG. 3 is a block diagram illustrating a configuration example of a control block of a PC according to the first embodiment of the present invention;

FIG. 4 is a flowchart illustrating an example of defect detection processing according to the first embodiment of the present invention;

FIG. 5 is a flowchart illustrating an example of defect candidate specifying processing according to the first embodiment of the present invention;

FIG. 6 is a perspective view of a shaped object according to the first embodiment of the present invention;

FIG. 7 is a diagram illustrating an example of a BSE image of a top view of shaped objects in the middle of PBF-AM from a Z direction according to the first embodiment of the present invention;

FIG. 8 is a diagram illustrating an example of a BSE image in which a defect candidate A having occurred in an N-th layer has been observed according to the first embodiment of the present invention;

FIG. 9 is a diagram illustrating an example of a BSE image in which a defect candidate B having occurred in an N+1-th layer has been observed according to the first embodiment of the present invention;

FIG. 10 is a diagram illustrating an example of a BSE image of the defect candidate A and the defect candidate B observed when the N-th layer and the N+1-th layer have been caused to overlap each other according to the first embodiment of the present invention;

FIG. 11 is a diagram illustrating an example of the defect candidates A and B with extremely different sizes according to the first embodiment of the present invention;

FIG. 12 is a flowchart illustrating an example of defect determination processing according to the first embodiment of the present invention;

FIG. 13 is a diagram illustrating an example of defect candidates extending across a plurality of layers according to the first embodiment of the present invention;

FIG. 14 is a diagram illustrating an example of defect candidate IDs applied to defect candidates merged by a defect detection unit according to the first embodiment of the present invention;

FIG. 15 is a diagram illustrating an example in which the defect detection unit measures the lengths of the merged defect candidates in the XY direction and the Z direction according to the first embodiment of the present invention;

FIG. 16 is a flowchart illustrating an example of display control processing according to the first embodiment of the present invention;

FIG. 17 is a diagram illustrating an example of a GUI screen for setting content of shaping control in a case where defects detected by the defect detection processing exceed a threshold value according to the first embodiment of the present invention;

FIG. 18 is a flowchart illustrating an example of shaping control processing according to the first embodiment of the present invention;

FIG. 19 is a flowchart illustrating an example of shaping control processing according to a second embodiment of the present invention;

FIG. 20 is a flowchart illustrating an example of shaping control processing according to a third embodiment of the present invention;

FIG. 21 is a diagram illustrating a display example of a result table display screen in which a result table is displayed according to the third embodiment of the present invention;

FIG. 22 is a diagram illustrating an example of a BSE image of a top view of a plurality of shaped objects in the middle of PBF-AM from the Z direction and a melting order of the plurality of shaped objects;

FIG. 23 is a diagram illustrating an example in the related art in which shaping processing of some of shaped objects is stopped in the middle of PBF-AM and a melting order of remaining shaped objects is changed;

FIG. 24 is a diagram illustrating an example in which shaping processing of some of shaped objects is stopped in the middle of PBF-AM and a melting order of remaining shaped objects is changed to an appropriate order according to a fourth embodiment of the present invention;

FIG. 25 is a flowchart illustrating an example of defect determination processing according to a sixth embodiment of the present invention; and

FIG. 26 is a flowchart illustrating an example of defect determination processing according to a seventh embodiment of the present invention.

## DETAILED DESCRIPTION

Hereinafter, embodiments of an information processing apparatus, a three-dimensional PBF-AM apparatus, and a defect detection method of the present invention will be described with reference to the drawings. Note that the same reference signs will be applied to common members in the drawings and repeated description thereof will be omitted.

[1. First Embodiment]

1-1. Configuration of Three-Dimensional PBF-AM Apparatus

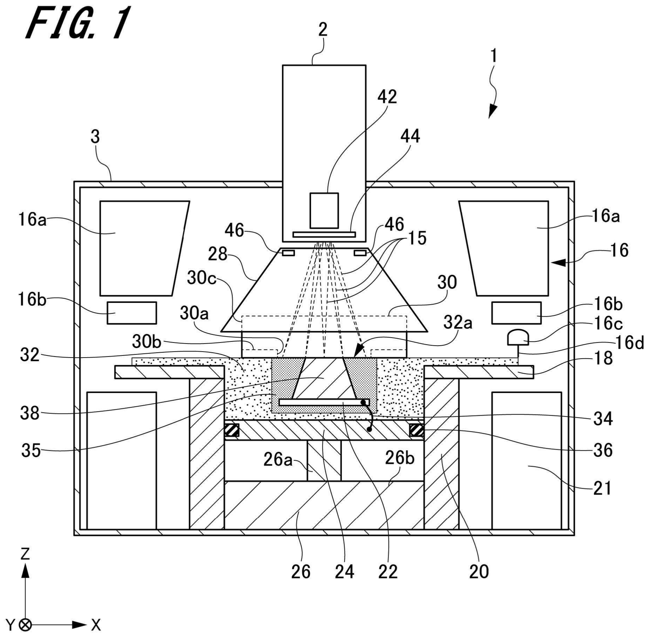

First, a three-dimensional PBF-AM apparatus according to a first embodiment (hereinafter, referred to as "this example") of the present invention will be described with reference to FIG. 1.

FIG. 1 is a schematic sectional view schematically illustrating the three-dimensional PBF-AM apparatus of this example. In the following description, the left-right direction in FIG. 1 will be defined as an X direction, the depth direction in FIG. 1 will be defined as a Y direction, and the up-down direction in FIG. 1 will be defined as a Z direction in order to clarify the shapes, positional relationships, and the like of components of the three-dimensional PBF-AM apparatus. The X direction, the Y direction, and the Z direction are directions orthogonal to each other. The X direction and the Y direction are parallel to the horizontal direction, and the Z direction is parallel to the vertical direction.

A three-dimensional PBF-AM apparatus 1 illustrated in FIG. 1 is an apparatus that irradiates a powder material 32 made of a metal powder such as titanium, copper, or tungsten, for example, with an electron beam 15 (an example of a shaping beam) to melt the powder material 32 and stacks layers in which the powder material 32 is solidified to thereby shape a three-dimensional object.

As illustrated in FIG. 1, the three-dimensional PBF-AM apparatus 1 includes a vacuum chamber 3, a beam irradiation device 2 (an example of an electron gun), a powder supply device 16, a shaping table 18, a build box 20, and a collection box 21. Furthermore, the three-dimensional PBF-AM apparatus 1 includes a shaping plate 22, an inner base 24, a plate moving device 26, a radiation shield cover 28, an electron shield 30, a camera 42, and a shutter 44. Furthermore, the three-dimensional PBF-AM apparatus 1 includes a plurality of detection units 46 that detect backscattered electrons.

The vacuum chamber 3 is a chamber for creating a vacuum state by evacuating air in the chamber by a vacuum pump, which is not illustrated. The inside of the vacuum chamber 3 is maintained in vacuum. A beam irradiation device 2 is attached to the vacuum chamber 3.

The beam irradiation device 2 is a device that irradiates the shaping plate 22 or a shaped surface 32a of a powder layer formed of the powder material 32 with the electron beam 15, and includes an electron gun (an example of the beam irradiation unit) and an electron optical system. The shaped surface 32a corresponds to an upper surface of the powder layer. A state of the powder layer changes as a three-dimensional PBF-AM process proceeds. Although not illustrated, the beam irradiation device 2 includes, as an electron optical system, the electron gun that is a generation source of the electron beam 15, a focusing lens that focuses the electron beam 15 generated by the electron gun, and a deflection lens that deflects the electron beam 15 focused by the focusing lens.

The focusing lens is configured using a focusing coil and focuses the electron beam 15 by a magnetic field generated by the focusing coil. The deflection lens is configured using a deflection coil and deflects the electron beam 15 by a magnetic field generated by the deflection coil. Therefore, the electron optical system performs scanning with the electron beam 15 in accordance with melting conditions for melting the powder material and melts the uppermost layer (an example of a powder bed) of the powder material spread on the shaping plate 22 by the electron beam 15.

The powder supply device 16 (an example of a powder supply system) supplies the powder material 32 as an example of a powder material serving as a raw material for a shaped object 38 onto the shaping table 18 and spreads the powder material over the shaping plate 22 to form a powder layer. The powder supply device 16 includes a hopper 16a, a powder dropper 16b, and a recoater 16c.

The hopper 16a is a container for storing metal powder. The powder dropper 16b is a device that drops the powder material 32 stored in the hopper 16a onto the shaping table 18.

The recoater 16c is an elongated member that is long in the Y direction and includes a blade 16d for spreading the powder. The recoater 16c spreads the powder material 32 dropped by the powder dropper 16b on the shaping table 18 and the shaping plate 22. Note that the recoater 16c is provided to be movable in the X direction in order to spread the powder material 32 over the entire surface of the shaping table 18.

The shaping table 18 is horizontally disposed inside the vacuum chamber 3. The shaping table 18 is disposed on the side further downward than the powder supply device 16. A central portion of the shaping table 18 is opened. The opening shape of the shaping table 18 is a circle in plan view or a polygon in plan view (for example, a quadrangle in plan view).

The build box 20 forms a space for shaping. In the vacuum chamber 3, the build box 20 having a circular or polygonal section is provided. An upper end portion of the build box 20 is connected to an opening edge of the shaping table 18. A lower end portion of the build box 20 is connected to a bottom wall of the vacuum chamber 3.

The collection box 21 collects the powder material 32 supplied more than necessary out of the powder material 32 supplied onto the shaping table 18 by the powder supply device 16.

The shaping plate 22 forms the shaped object 38 using the powder material 32. The shaped object 38 is formed by being stacked on the shaping plate 22. The shaping plate 22 is formed in a circle in plan view or a polygon in plan view in accordance with the opening shape of the shaping table 18. The shaping plate 22 is connected (grounded) to the inner base 24 by a ground wire 34 so as not to be in an electrically floating state. The inner base 24 is held at a ground (GND) potential.

When each layer of the shaped object 38 is shaped, a powder bed is formed on the shaping plate 22 and the inner base 24. The powder bed is obtained by spreading the powder material 32 up to a position that is several mm higher than the shaping table 18 placed on the build box 20. The powder bed is formed by the powder supply device 16 filled with the powder material 32 and the recoater 16c.

The inner base 24 is provided to be movable in the up-down direction (Z direction). The shaping plate 22 moves in the up-down direction integrally with the inner base 24. The inner base 24 has a larger outer dimension than the shaping plate 22. The inner base 24 slides in the up-down direction along the inner surface of the build box 20. A seal member 36 is attached to an outer peripheral portion of the inner base 24. The seal member 36 is a member that holds slidability and sealability between the outer peripheral portion of the inner base 24 and the inner surface of the build box 20.

The seal member 36 is made of a material having heat resistance and elasticity. The powder material 32 is spread on the inner base 24, and the shaping plate 22 on which the shaped object 38 is to be shaped is disposed.

The plate moving device 26 moves the shaping plate 22 and the inner base 24 in the up-down direction. The plate moving device 26 is provided at a lower portion inside the build box 20. The plate moving device 26 includes a shaft 26a and a drive mechanism unit 26b. The shaft 26a is connected to a lower surface of the inner base 24. The drive mechanism unit 26b includes a motor and a power transmission mechanism, which are not illustrated, and drives the power transmission mechanism using the motor as a drive source to thereby move the shaping plate 22 and the inner base 24 in the up-down direction (Z direction) integrally with the shaft 26a. The power transmission mechanism includes, for example, a rack and pinion mechanism, a ball screw mechanism, and the like.

The radiation shield cover 28 is disposed between the shaping plate 22 and the beam irradiation device 2 in the Z direction. The radiation shield cover 28 is made of metal such as stainless steel. The radiation shield cover 28 shields radiation heat generated when the powder material 32 is irradiated with the electron beam 15 by the beam irradiation device 2.

The electron beam 15 is used to irradiate the powder material 32 therewith and melts the powder material 32. If the radiation heat released from the shaped surface 32a of the powder layer is widely diffused into the vacuum chamber 3 at this time, thermal efficiency deteriorates.

On the other hand, in a case where the radiation shield cover 28 is disposed above the shaping plate 22, the heat released from the shaped surface 32a is shielded by the radiation shield cover 28, and the shielded heat is reflected by the radiation shield cover 28 and is then returned to the shaping plate 22 side. Therefore, the heat generated by the irradiation with the electron beam 15 can be efficiently used.

In addition, the radiation shield cover 28 has a function of preventing evaporated substances generated when the powder material 32 is irradiated with the electron beam 15 from adhering to (depositing on) the inner wall of the vacuum chamber 3.

Here, the deposited substances are metal vapor, metal spatter by fireworks, and the like.

In other words, when the powder material 32 is irradiated with the electron beam 15, a part of the melted metal becomes mist-like evaporated substances and rises from the shaped surface 32a. The radiation shield cover 28 is disposed so as to cover the space above the shaped surface 32a so that the evaporated substances do not diffuse into the vacuum chamber 3.

The shaped object 38 is constructed by two-dimensionally melting the powder material 32 of one layer that is present in the region of the shaped object 38 by the electron beam 15 from the beam irradiation device 2 and superimposing such layers. A region other than the shaped object 38 of the powder material 32 spread on the shaping plate 22 is a presintered body 35 obtained by presintering the powder material 32 and has conductivity by the electron beam 15 emitted from the beam irradiation device 2.

An electron shield 30 is attached below the radiation shield cover 28. The electron shield 30 has an opening portion 30a and a mask portion 30b. In the forming of the shaped object 38, the electron shield 30 is disposed to cover the upper surface of the powder material 32, that is, the shaped surface 32a.

At this time, the opening portion 30a exposes the powder material 32 spread on the shaping plate 22. The mask portion 30b is a conductive material that shields the powder material 32 in an unsintered region located on the side further outward than the opening portion 30a. Note that it is desirable that the mask portion 30b be formed of the same type of metal material as the powder material.

The shape of the opening portion 30a is formed in accordance with the shape of the shaping plate 22. For example, the shape of the opening portion 30a in plan view is formed in a circular shape in accordance with the shaping plate 22 if the shaping plate 22 has a circular shape in plan view, and the shape of the opening portion 30a in plan view is formed in a polygonal shape in accordance with the shaping plate 22 if the shaping plate 22 is a polygonal shape in plan view.

The electron shield 30 is disposed below the radiation shield cover 28. The opening portion 30a and the mask portion 30b of the electron shield 30 are disposed between the shaping plate 22 and the radiation shield cover 28 in the Z direction. The electron shield 30 includes a surrounding portion 30c. The surrounding portion 30c is disposed so as to surround the space above the opening portion 30a. A part (upper portion) of the surrounding portion 30c overlaps the radiation shield cover 28 in the Z direction.

The surrounding portion 30c has a function of shielding radiation heat generated from the shaped surface 32a and a function of suppressing diffusion of evaporated substances generated from the shaped surface 32a. In other words, the surrounding portion 30c has functions similar to those of the radiation shield cover 28. Note that although not illustrated, the electron shield 30 is provided with a vertical drive mechanism so as to move upward without an interference with the recoater 16c at the time of squeegeeing.

The electron shield 30 is made of metal having a melting point higher than that of the powder material 32 used as a raw material of the shaped object 38. The electron shield 30 is made of a material having low reactivity with the powder material 32. Examples of a constituent material of the electron shield 30 include titanium. In addition, the electron shield 30 may be made of metal of the same material as the powder material 32 to be used. Although not illustrated, the electron shield 30 is electrically grounded to GND. The electron shield 30 suppresses occurrence of powder scattering to a small scale by an electrical shielding function in a case where the powder material 32 is presintered through irradiation with the electron beam 15 in a preheating process before a main sintering process, which will be described later.

A camera 42 for imaging a state of the shaped surface and a shutter 44 for preventing vapor deposition on the camera 42 as much as possible are attached to the upper surface of the radiation shield cover 28. The camera 42 is a camera capable of imaging the shaped surface 32a of the powder layer. The camera 42 is disposed to be shifted in position in the Y direction from the beam irradiation device 2 so as not to interfere with the position of the beam irradiation device 2.

The camera 42 is preferably constituted by a visible light camera such as a digital video camera, for example. The camera 42 generates an image (image data) of the powder layer by imaging the shaped surface 32a of the powder layer. Therefore, the image generated by the camera 42 is an image indicating the state of the shaped surface 32a of the powder layer. Note that imaging by the camera 42 is performed in a state where illumination light emitted from an illumination light source (not illustrated) included in the three-dimensional PBF-AM apparatus 1 is applied to the shaped surface 32a of the powder layer.

The shutter 44 protects the camera 42 and an observation window so that the evaporated substances generated from the shaped surface 32a when the powder material 32 is melted through the irradiation with the electron beam 15 do not adhere to the camera 42 and the observation window. The imaging of the shaped surface 32a by the camera 42 is performed in a state where the shutter 44 is opened. The camera 42 basically keeps imaging, and the shutter 44 is closed only during the melting process. In addition, the imaging by the camera 42 is performed in a state where the shutter 44 is closed in a process in which the evaporated substances are likely to be generated, and a process in which the amount of generated evaporated substances is large, that is, a process in which the powder material 32 is melted by the electron beam 15.

The plurality of detection units 46 that detect backscattered electrons are disposed below the beam irradiation device 2.

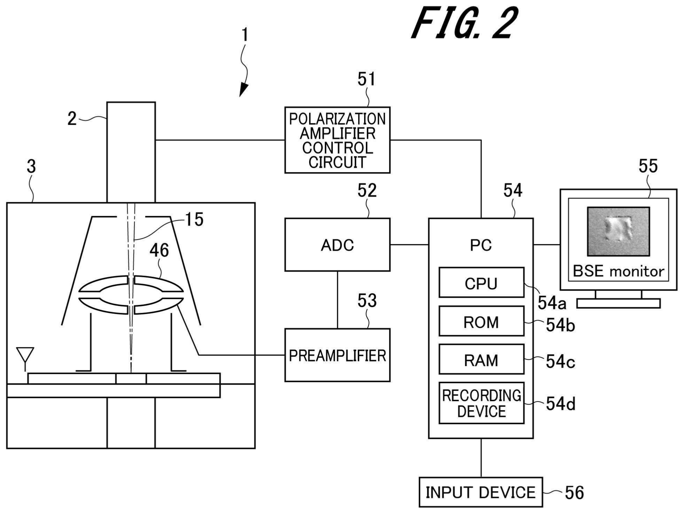

Specifically, the detection units 46 are disposed between the beam irradiation device 2 and the shaped surface 32a of the shaped object 38 formed on the shaping plate 22. The detection units 46 measure backscattered electrons generated by the electron beam 15 with which the shaped object 38 or the presintered body 35 is irradiated, and output data of backscattered electron signals as layer data to a PC 54 illustrated in FIG. 2, which will be described later, or a hard computer (not illustrated).

In recent years, the three-dimensional PBF-AM apparatus 1 with a function of monitoring the surface of the shaped object 38 added has been provided for the purpose of managing quality of the shaped object 38. In the three-dimensional PBF-AM apparatus 1, the surface of the shaped object 38 can be visualized not only from data of an image obtained by imaging the surface of the shaped object 38 using the above-mentioned camera 42 but also from data obtained by the detection units 46 detecting the backscattered electrons backscattered from the surface of the shaped object 38. However, the three-dimensional PBF-AM apparatus 1 may adopt any of the configuration including only the camera 42 and a configuration including the camera 42 and the detection units 46.

In the following embodiment, an example will be described in which defects are detected using a BSE image formed on the basis of backscattered electrons detected by the detection units 46. In monitoring based on the backscattered electrons using the electron beam, the PC 54 or the hard computer performs processing of calculating and imaging the backscattered electron signals and the like to monitor the state of the powder bed and the shaped object 38. In a case where defects are detected by monitoring using backscattered electrons, the timing at which the PC 54 acquires monitoring data is typically immediately after the presintered body is melted.

1-2. Configuration Example of Control System of Three-Dimensional PBF-AM Apparatus

Next, a configuration example of a control system of the three-dimensional PBF-AM apparatus 1 will be described.

FIG. 2 is a block diagram illustrating a configuration example of the control system of the three-dimensional PBF-AM apparatus 1 according to this example. The three-dimensional PBF-AM apparatus 1 includes the above-mentioned detection units 46. Furthermore, hardware and software parts for performing shaping control, which are provided outside the configuration of the three-dimensional PBF-AM apparatus 1 illustrated in FIG. 1, are added in FIG. 2.

As illustrated in FIG. 2, the three-dimensional PBF-AM apparatus 1 includes a polarization amplifier control circuit 51 indicating an electron beam control unit, an analog-digital conversion circuit (ADC) 52, a preamplifier 53, a personal computer (PC) 54 indicating an example of a control unit, and a BSE monitor 55.

The polarization amplifier control circuit 51 is connected to the beam irradiation device 2 and the PC 54. Also, the polarization amplifier control circuit 51 controls the beam irradiation device 2 on the basis of set beam scanning information. In this manner, the beam irradiation device 2 irradiates a predetermined position with the electron beam 15. In addition, the polarization amplifier control circuit 51 transmits beam irradiation position information indicating the position of irradiation with the electron beam 15 to the PC 54.

The preamplifier 53 is connected to the detection units 46 and the ADC 52. Moreover, the preamplifier 53 converts a backscattered electron current detected by the detection units 46 from a current signal into a voltage signal. The voltage signal converted by the preamplifier 53 is transmitted to the ADC 52. The ADC 52 converts the backscattered electron signal, which has been converted into a voltage signal, from an analog signal to a digital signal and transmits the digital signal to the PC 54.

The PC 54 is an example of an information processing apparatus and includes a central processing unit (CPU) 54a, a read only memory (ROM) 54b, a random access memory (RAM) 54c, and a recording device 54d.

The CPU 54a reads a program code of software for realizing each function according to the present embodiment from the ROM 54b, loads the program code into the RAM 54c, and executes the program code. Variables, parameters, and the like generated in the middle of arithmetic processing of the CPU 54a are temporarily written in the RAM 54c, and these variables, parameters, and the like are read by the CPU 54a as appropriate.

An image processing unit, which is one of functions of the CPU 54a, captures an image generated by the camera 42 and performs predetermined image processing on the captured image. Then, the PC 54 outputs the camera image after being subjected to the image processing by the image processing unit to the BSE monitor 55. A shaping control software program (hereinafter, abbreviated as "shaping control software") read from the ROM 54b and executed by the CPU 54a controls the polarization amplifier control circuit 51. The shaping control software controls the preamplifier 53 via the ADC 52.

As the recording device 54d, a non-volatile recording medium such as a hard disk drive (HDD), a solid state drive (SSD), an optical disc, a magneto-optical disc, or a flash memory, for example, is used. In addition to an operating system (OS) and various parameters, a program for causing the PC 54 to function is recorded in the recording device 54d.

The ROM 54b and the recording device 54d record programs, data, and the like necessary for the CPU 54a to operate and are used as examples of computer-readable non-transitory recording media storing programs to be executed by the PC 54. The recording device 54d stores the camera image generated by the image processing unit. Furthermore, the recording device 54d stores the beam irradiation position information transmitted from the polarization amplifier control circuit 51.

The CPU 54a selects a predetermined arithmetic expression from a plurality of arithmetic expressions in accordance with the shaping process. Then, the CPU 54a performs arithmetic processing on the backscattered electron signal using the selected arithmetic expression to calculate an arithmetic signal. Then, the image processing unit images the arithmetic signal to thereby acquire a backscattered electron composition image (BSE Image). The CPU 54a outputs the acquired backscattered electron composition image (BSE image) to the BSE monitor 55. In addition, the recording device 54d stores the backscattered electron composition image (BSE image).

The BSE monitor 55 is constituted by, for example, a display such as a liquid crystal display or an organic electro luminescence display (ELD). The BSE monitor 55 displays the BSE image and the camera image output from the PC 54 on a display screen.

As the input device 56, a keyboard and a mouse, for example, are used. The user can perform predetermined input operations on the PC 54 and provide instructions using the input device 56.

1-3. Operation Example of Three-Dimensional PBF-AM Apparatus

Next, an operation example of the three-dimensional PBF-AM apparatus 1 will be described.

First, the user creates shaping data for performing melting as the shape of the shaped object 38 to be shaped using the shaping control software inside the PC 54. At this time, the user inputs appropriate melting conditions including a correction function and the like. After completing the creation of the shaping data, the user causes the three-dimensional PBF-AM apparatus 1 to start the shaping on the basis of the shaping data.

Next, the beam irradiation device 2 operates on the basis of a control command given from the PC 54 and heats the shaping plate 22. The beam irradiation device 2 irradiates the shaping plate 22 with the electron beam 15 through the opening portion 30a of the electron shield 30 and scans the shaping plate 22 with the electron beam 15. In this manner, the shaping plate 22 is heated to a temperature at which the powder material 32 is presintered.

Next, the powder material 32 is spread on the shaping plate 22. The plate moving device 26 causes the shaping plate 22 to move downward by a predetermined amount by operating on the basis of a control command given from the PC 54.

Next, the user disposes the upper surface of the shaping plate 22 covered with the powder material 32 at substantially the same height as that of the upper surface of the powder material 32 spread on the shaping table 18. Next, the user lowers the electron shield 30 to the upper surface of the shaping plate 22 and brings the electron shield 30 into contact with the powder material 32 so as to cover the powder material 32 that is present at the outer periphery of the shaping plate 22.

Next, the beam irradiation device 2 irradiates a region that is slightly narrower than the entire upper surface of the shaping plate 22 with the electron beam 15. In other words, the region that is slightly narrower than the entire upper surface of the shaping plate 22 is a region in which the electron beam 15 is not applied to the opening portion inside the electron shield 30, and the beam irradiation device 2 irradiates the region with the electron beam. In this manner, the beam irradiation device 2 raises the temperature of the shaping plate 22 in advance up to the temperature at which the powder material 32 is completely presintered by irradiating the region that is slightly narrower than the entire upper surface of the shaping plate 22 with the electron beam 15.

At the start of the shaping, the plate moving device 26 lowers the inner base 24 by a predetermined amount so that a state where the upper surface of the shaping plate 22 is located at a slightly lower position than the upper surface of the powder material 32 spread on the shaping table 18 is achieved. At this time, the shaping plate 22 is lowered by a predetermined amount $\Delta Z$ together with the inner base 24. The amount $\Delta Z$ of slight lowering corresponds to the subsequent layer thickness in the Z direction. Thereafter, the plate moving device 26 moves the electron shield 30 upward.

Next, the powder supply device 16 drops the powder material 32 supplied from the hopper 16a to the powder dropper 16b onto the shaping table 18 by the powder dropper 16b. Thereafter, the powder supply device 16 moves the recoater 16c from one end side to the other end side in the X direction to thereby spread the powder material 32 on the inner base 24 and form a powder bed.

As a result, the powder material 32 is spread on the shaping table 18 with a thickness corresponding to $\Delta Z$. The excess powder material 32 is collected in the collection box 21. After the recoater 16c gets out of the electron shield 30, the powder supply device 16 lowers the electron shield 30 up to the shaped surface again, and the electron shield 30 then covers the powder material 32 that is present at the outer periphery of the shaping plate 22.

Next, the beam irradiation device 2 preheats the powder layer on the shaping plate 22 by operating on the basis of control commands given from the polarization amplifier control circuit 51 and the PC 54. In other words, the beam irradiation device 2 performs powder-heat (P.H) on the powder layer on the shaping plate 22 to thereby presinter the powder material 32. Once the powder material 32 is presintered, the powder material 32 can have conductivity. Therefore, the powder material 32 can suppress powder scattering in the main sintering process performed after the preheating process.

The beam irradiation device 2 irradiates the powder material 32 spread on the shaping plate 22 with the electron beam 15. Furthermore, the beam irradiation device 2 scans, with the electron beam 15, a region that has a size with which the electron beam is not applied to the opening portion inside the electron shield 30 and that extends a wider range than the region for forming the shaped object 38 (hereinafter, also referred to as a "shaping region"). In this manner, the powder material 32 that is present in the shaping region and the powder material 32 that is present in the surroundings of the shaping region are presintered together.

The beam irradiation device 2 melts a two-dimensional shape region with the electron beam 15 in accordance with a two-dimensional shape obtained by slicing a designed shaped object prepared in advance at intervals of $\Delta Z$. After the powder material 32 corresponding to one layer is melted and solidified, the beam irradiation device 2 irradiates the region that is slightly narrower than the shaping plate 22 again with the electron beam 15 to raise the temperature, and prepares for the spreading of the powder material 32. After the temperature is raised to a predetermined temperature, the beam irradiation device 2 turns off the electron beam 15 and moves the electron shield 30 upward.

The plate moving device 26 lowers the inner base 24 by $\Delta Z$ and causes the recoater 16c to move on the opposite side along the upper surface of the powder material 32 spread on the shaping table 18 again. Then, the plate moving device 26 spreads the powder material 32 corresponding to $\Delta Z$ on the previous layer and lowers the electron shield 30 up to the shaped surface again.

The beam irradiation device 2 irradiates the region that has a size with which the electron beam 15 is not applied to the opening portion inside the electron shield 30 with the electron beam 15, reliably presinters the powder material 32 that has newly been spread, and then melts the region with the two-dimensional shape corresponding to the layer. The beam irradiation device 2 repeats this process to form the shaped object 38.

In addition, the beam irradiation device 2 acquires a backscattered electron composition image (BSE image) as described below. First, the beam irradiation device 2 scans a presintered region where the presintered powder material 32 is present with the electron beam 15 by operating on the basis of control commands given from the polarization amplifier control circuit 51 and the PC 54. At this time, the beam irradiation device 2 reduces an electron beam current of the electron beam 15 as much as possible and irradiates the shaped surface 32a in focus. The detection units 46 detect backscattered electrons generated by the electron beam 15. The detection units 46 output a detected backscattered electron signal to the PC 54 via the preamplifier 53 and the ADC 52.

1-4.Configuration Example of Control Block

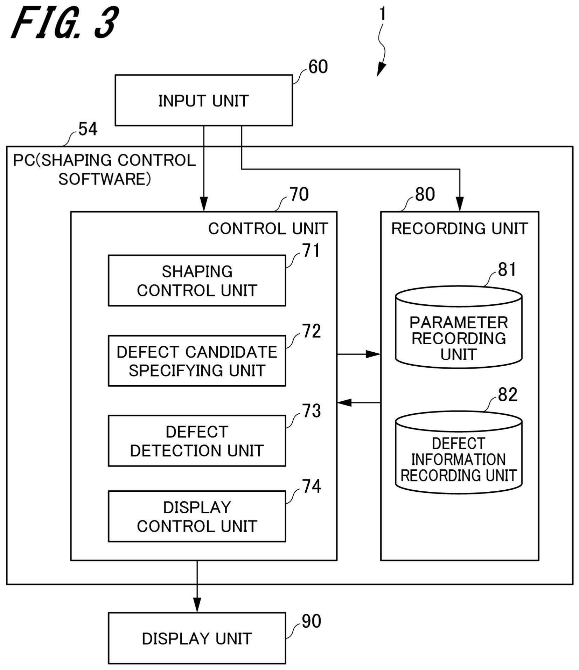

FIG. 3 is a block diagram illustrating a configuration example of a control block of the PC 54. Defect detection processing performed in cooperation with each functional block illustrated in FIG. 3 is executed by the CPU 54a of the PC 54 executing the shaping control software. Furthermore, the three-dimensional PBF-AM apparatus 1 can also be configured to incorporate each functional block of the PC 54 illustrated in FIG. 3.

The three-dimensional PBF-AM apparatus 1 illustrated in FIG. 1 includes an input unit 60, the PC 54, and a display unit 90.

The input unit 60 has a function of enabling input operations of the user, and the input device 56 illustrated in FIG. 2 implements the function. The input unit 60 is used by the user to perform input operations. The input unit 60 is a functional unit of the input device 56 illustrated in FIG. 2. The input operations of the user include setting of each parameter, which will be described later, selection for display of defects or defect candidates, and the like. Furthermore, an instruction to cause the display unit 90 to two-dimensionally (2D) or three-dimensionally (3D) display the shaped object 38 in the middle of shaping or after completion of shaping is also given by an input operation of the user.

The PC 54 includes a control unit 70 and a recording unit 80.

The control unit 70 has functions of performing calculation and control of the processing of this example, and the functions are implemented by the CPU 54a, the ROM 54b, and the RAM 54c illustrated in FIG. 2.

The recording unit 80 has a function of recording each parameter, each piece of data, each image, and the like of this example, and the function is implemented by the recording device 54d illustrated in FIG. 2.

The control unit 70 includes a shaping control unit 71, a defect candidate specifying unit 72, a defect detection unit 73, and a display control unit 74. The recording unit 80 includes a parameter recording unit 81 and a defect information recording unit 82.

The parameter recording unit 81 records parameters such as threshold values to be compared in processing, which will be described later.

The defect information recording unit 82 records defect information including layer data, defect candidates specified by the defect candidate specifying unit 72, defect detection results, and the like. The defect information includes at least one of the number of defects detected by the defect detection unit 73, the positions of the defects, the volume of the shaped object, the volume defect rate, the area defect rate, the number of defects, and the maximum length.

The shaping control unit 71 controls processing related to PBF-AM of the three-dimensional PBF-AM apparatus 1 such as the above-described beam irradiation device 2, plate moving device 26, and the like. Furthermore, after main melting is performed in the PBF-AM processing, the shaping control unit 71 controls the beam irradiation device 2, and the detection unit 46 detects backscattered electrons generated by scanning the shaped surface with an emission current that is low enough to detect the backscattered electrons and acquires a backscattered electron image. In a case where the heights of recessed portions and projecting portions on the layer surface exceed a prescribed threshold value, the shaping control unit 71 records layer data indicating that it is determined that irregularities have occurred in the shaped surface in the defect information recording unit 82. However, layer data indicating that it is not determined that irregularities have occurred in the shaped surface is also recorded in the defect information recording unit 82.

The defect candidate specifying unit 72 reads, from the defect information recording unit 82, the layer data captured for each layer in the PBF-AM of the shaped object 38 and detects failure locations occurring in the layers as defect candidates for each layer on the basis of the layer data. In addition, the defect candidate specifying unit 72 specifies a plurality of defect candidates at substantially the same position in a plurality of layers that are adjacent in the stacking direction.

The defect detection unit 73 detects defects remaining in the shaped object 38 on the basis of the sizes of the plurality of defect candidates, which have been specified in the plurality of layers and are located at substantially the same position, in the stacking direction and the sizes thereof inside the layers. Here, the defect detection unit 73 merges the plurality of defect candidates located at substantially the same position in the stacking direction and applies a defect candidate identifier (for example, IDs 1 to 4) to each of the defect candidates. Furthermore, the defect detection unit 73 measures the stacking direction length ($Lz$) of the merged defect candidates and the first direction length (the length $Lx$ in the X direction) and the second direction length (the length $Ly$ in the Y direction) inside the layers intersecting the stacking direction of the merged defect candidate for each layer, and sets the maximum length out of the first direction length ($Lx$) and the second direction length ($Ly$) as the maximum layer length ($Lxy$). Also, the defect detection unit 73 regards the longer one of the stacking direction length ($Lz$) and the maximum layer length ($Lxy$) as the maximum length, and in a case where the maximum length exceeds a maximum length threshold value ($\delta$), the defect detection unit 73 detects the merged defect candidate as a defect.

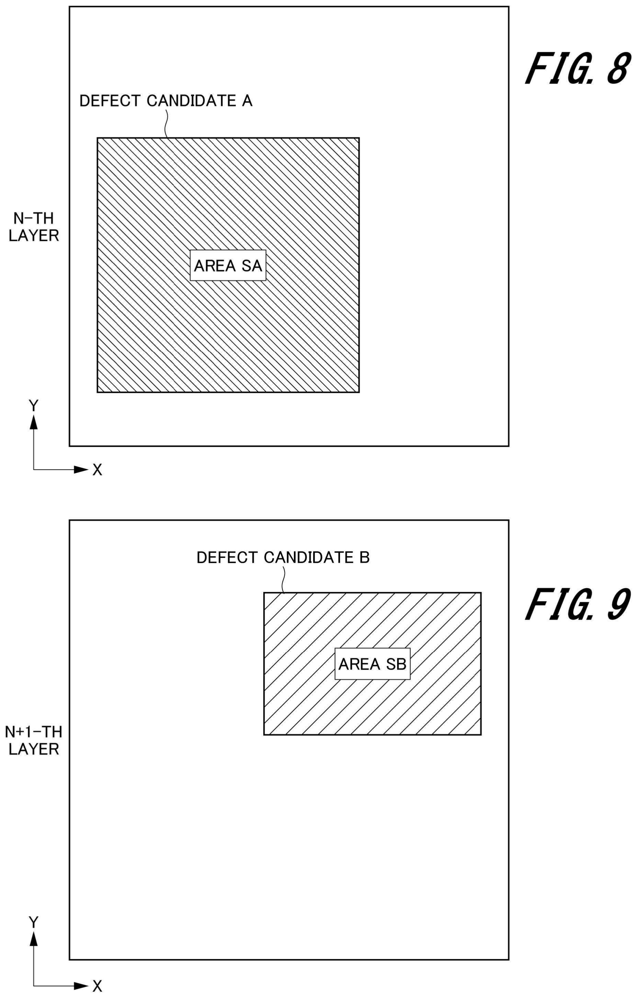

The display control unit 74 controls a display mode of an image to be displayed on the display unit 90 on the basis of the layer data and the defect information read from the defect information recording unit 82 and an input operation input from the input unit 60. For example, the display control unit 74 generates a 2D image, a 3D image, a graph, and the like of a shaped surface of the shaped object 38 and generates a screen (an example of a visualized image) in which the display unit 90 is caused to display these images. Furthermore, the display control unit 74 also performs control (enlargement or size reduction of the image, movement of the image to be displayed, and the like) to change content of the display of the screen in accordance with the input operation. Then, the display control unit 74 performs control such that the visualized image can be displayed on the display unit 90. The display control unit 74 can cause information such as a state of the shaped object 38, the shapes of the defect candidates (FIGS. 8 to 11, 15, and the like, which will be described later), whether or not defects have been detected, various graphs, and the like to be displayed in various screens on the display unit 90 even in the middle of the PBF-AM processing, such that the user can check the displayed information.

The display unit 90 has a function of displaying an image processed by the PC 54, and the function is implemented by the BSE monitor 55 illustrated in FIG. 2. As the display unit 90, a liquid crystal display device or an organic EL display device, for example, is used. In a case where a touch panel display is used for the PC 54, the input unit 60 and the display unit 90 are integrally formed.

Note that although FIG. 3 illustrates the configuration in which the PC 54 includes the recording unit 80, the recording unit 80 may be configured in a recording medium outside the PC 54. In this case, the control unit 70 reads data of parameters, layer data, and defect information recorded in the external recording medium and performs the processing.

1-5. Example of Defect Detection Processing

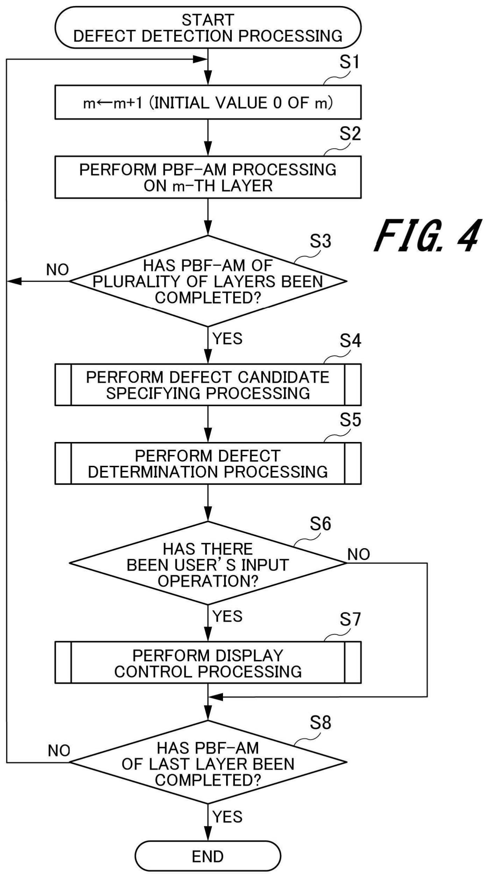

Next, an example of defect detection processing will be described with reference to the flowcharts and the explanatory diagrams in FIG. 4 and the following drawings. In the following description, only operations of parts related to defect detection that are different from those in the related art will be described, and parts related to the other shaping process will be omitted since they are the same as those described in the section of the related art. The PC 54 (shaping controlling software) of this example can perform defect detection in real time during the PBF-AM of the shaped object 38.

FIG. 4 is a flowchart illustrating an example of the defect detection processing. The defect detection processing is an example of a defect detection method performed by the control unit 70.

First, the shaping control unit 71 illustrated in FIG. 3 substitutes m + 1 where m denotes the m-th layer and an initial value is zero, thereby obtaining the first layer (S1). Next, the shaping control unit 71 performs the above-mentioned PBF-AM processing on the first layer (S2).

Next, the shaping control unit 71 determines whether or not the PBF-AM processing on a plurality of layers has been completed (S3). In a case where the PBF-AM processing on the plurality of layers has not been completed (NO in S3), that is, in a case where only the PBF-AM processing on the first layer has been completed, the processing returns to Step S1, and the PBF-AM processing on the second and subsequent layers is performed. On the other hand, in a case where the PBF-AM processing on the plurality of layers has been completed (YES in S3), the processing proceeds to Step S4.

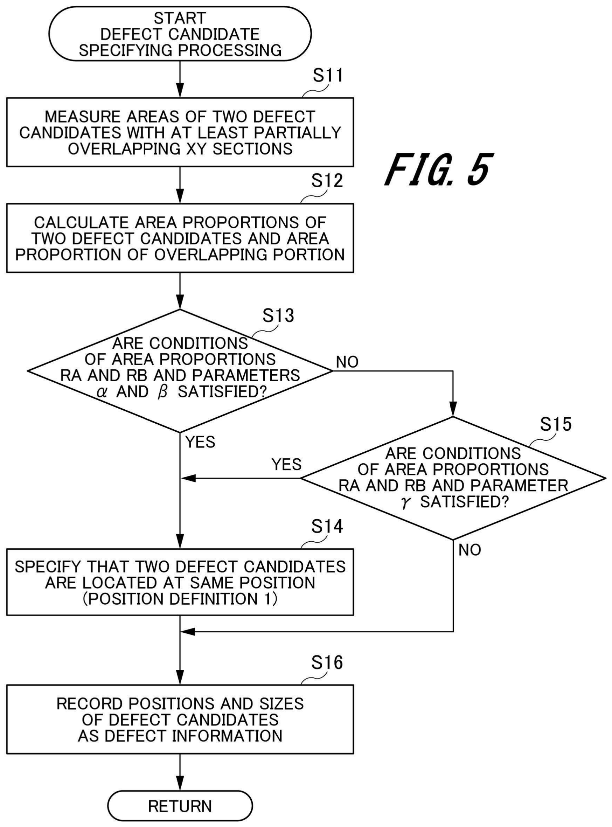

Next, the defect candidate specifying unit 72 performs defect candidate specifying processing illustrated in FIG. 5 (S4). Here, the defect candidate specifying processing will be described in detail.

FIG. 5 is a flowchart illustrating an example of the defect candidate specifying processing. The defect candidate specifying processing is a sub-routine of Step S4 in FIG. 4.

First, the defect candidate specifying unit 72 measures the area of each of two defect candidates that have at least partially overlapping XY sections and are adjacent to each other in the stacking direction (S11). Here, the area of the defect candidate will be described.

The defect candidate specifying unit 72 specifies the positions of the defect candidates on the basis of the layer data obtained at the time of the shaping of each layer. The defect candidate specifying unit 72 assumes that the positions of the defect candidates are substantially the same position in the XY section in the plurality of layers, and does not consider the positions thereof in the Z direction (Z coordinates). Here, attention is paid to the position of the XY section in the plurality of layers, and an area where a plurality of defect candidates overlap in adjacent layers is taken into consideration.

However, two defect candidates overlapping in adjacent layers do not always have the same size. Therefore, the defect candidate specifying unit 72 regards a candidate with a larger size in the XY section out of the two defect candidates as a defect candidate A and regards a candidate with a smaller size in the XY section as a defect candidate B. Here, as an example of layers that are adjacent in the Z direction, a powder layer of an N-th layer (N is an integer of equal to or greater than one) and a powder layer of an N+1-th layer will be exemplified. In the following description, the powder layer of the N-th layer and the powder layer of the N+1-th layer will be abbreviated as the N-th layer and the N+1-th layer, respectively.

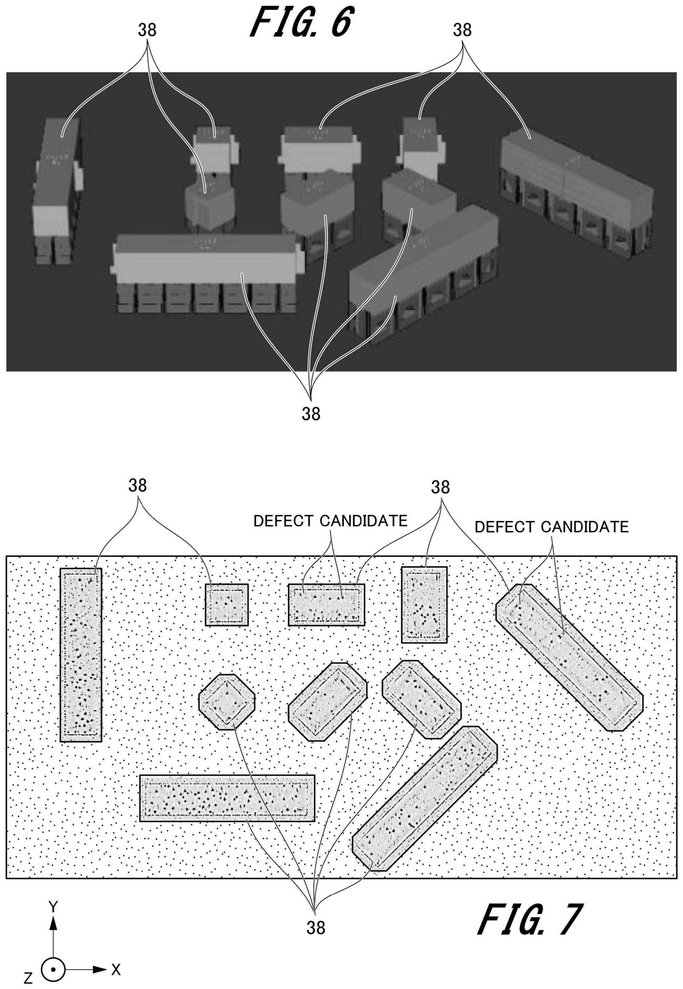

Here, the shaped object 38 and the defect candidates will be described with reference to FIGS. 6 to 11.

FIG. 6 is a perspective view of the shaped object 38. This perspective view is a 3D display of a plurality of shaped objects 38 shaped by PBF-AM processing performed once on the basis of computer aided design (CAD) data. This example shows that PBF-AM of a total of ten shaped objects 38 is performed. Every time melting of one layer of each shaped object 38 is completed, the shaping control unit 71 illustrated in FIG. 3 acquires a BSE image of the shaped object 38 as layer data and records the BSE image in the defect information recording unit 82. For example, when the shaping control unit 71 is performing the PBF-AM on the ten shaped objects 38 as illustrated in FIG. 6 at the same time, a BSE image of the ten shaped objects 38 is acquired as layer data and is recorded in the defect information recording unit 82.

FIG. 7 is a diagram illustrating an example of a BSE image of a top view of the shaped objects 38 in the middle of PBF-AM from the Z direction. Since the PBF-AM is in the middle, shaped surfaces of the shaped objects 38 appear in the BSE image. Black spots thinly appear at the tops of the shaped objects 38. The black spots are irregularities occurring in the shaped surfaces in the middle of the PBF-AM and are recorded in the layer data by the shaping control unit 71 as described above. Then, the defect candidate specifying unit 72 specifies the locations of the black spots as defect candidates.

FIG. 8 is a diagram illustrating an example of a BSE image in which a defect candidate A having occurred in the N-th layer has been observed.

FIG. 9 is a diagram illustrating an example of a BSE image in which a defect candidate B having occurred in the N+1-th layer has been observed.

Since the area of the defect candidate having occurred in the N-th layer is larger than the area of the defect candidate having occurred in the N+1-th layer as described above, the defect candidate having occurred in the N-th layer will be referred to as the defect candidate A, and the defect candidate having occurred in the N+1-th layer will be referred to as the defect candidate B. Note that the positional relationship between the defect candidate A and the defect candidate B in the Z direction is not important, and the defect candidate A and the defect candidate B are purely distinguished by the defect candidate specifying unit 72 only by the sizes thereof in the XY section.

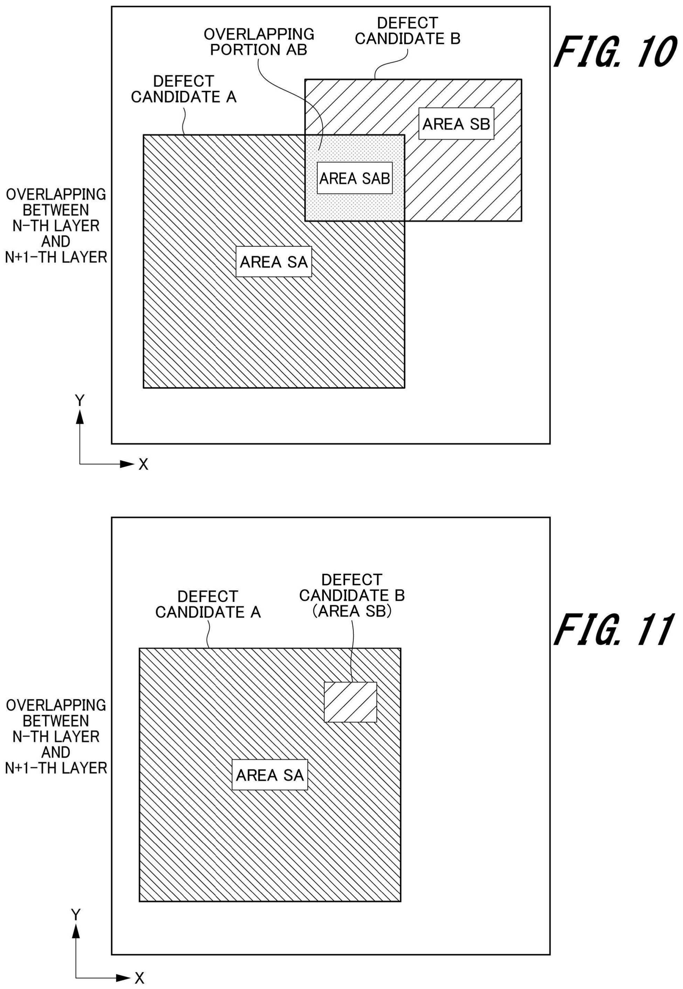

FIG. 10 is a diagram illustrating an example of a BSE image of the defect candidate A and the defect candidate B observed when the N-th layer and the N+1-th layer have been caused to overlap each other.

Although the positions of the defect candidate A and the defect candidate B in the XY section are shifted from each other, the defect candidate A and the defect candidate B are in a partially overlapping state. The overlapping part of the defect candidate A and the defect candidate B will be referred to as an overlapping portion AB. The defect candidate specifying unit 72 measures the defect candidate A, the defect candidate B, and the area SAB of the overlapping portion AB in the XY section of each layer on the basis of the layer data.

In Step S11, the defect candidate specifying unit 72 measures the area (SA) of the defect candidate in the N-th layer specified in the N-th layer and the area (SB) of the defect candidate in the N+1-th layer specified in the N+1-th layer from among the plurality of defect candidates overlapping in the plurality of layers that are adjacent in the stacking direction. Also, the defect candidate specifying unit 72 calculates the overlapping area (SAB) of the overlapping portion where the defect candidate in the N-th layer and the defect candidate in the N+1-th layer overlap each other in the stacking direction.

Next, the defect candidate specifying unit 72 calculates area ratios of the two defect candidates and an area ratio of the overlapping portion AB (S12). Here, the defect candidate specifying unit 72 calculates an overlapping area ratio (RA) with respect to the area of the defect candidate in the N-th layer and an overlapping area ratio (RB) with respect to the area of the defect candidate in the N+1-th layer as the area ratios. Therefore, the defect candidate specifying unit 72 represents the area ratio of the overlapping portion AB with respect to the defect candidate A as RA. The area ratio RA is calculated by Equation (1) below.

$$RA = SAB/SA...(1)$$

Similarly, the defect candidate specifying unit 72 represents the area ratio of the overlapping portion AB with respect to the defect candidate B as RB. The area ratio RB is calculated by Equation (2) below.

$$RB = SAB/SB...(2)$$

Next, the defect candidate specifying unit 72 determines whether or not conditions of the area ratios RA and RB and parameters $\alpha$ and $\beta$ are satisfied (S13). The parameter $\alpha$ is an example of an area ratio threshold value to be compared with the area ratio RA, while the parameter $\beta$ is an example of an area ratio threshold value to be compared with the area ratio RB.

The defect candidate specifying unit 72 specifies that the two defect candidates A and B are located at substantially the same positions (S14) in a case where it is determined that the conditions of the area ratios RA and RB and the parameters $\alpha$ and $\beta$ are satisfied (YES in S13).

For example, one area ratio threshold value that is a threshold value for each of the area ratios RA and RB, namely a total of two area ratio threshold values are recorded in the parameter recording unit 81. The area ratio threshold value parameter that is a threshold value for the area ratio RA is represented as $\alpha$, while the area ratio threshold value parameter that is a threshold value for the area ratio RB is represented as $\beta$. The area ratio threshold value parameter $\alpha$ is used as an example of a first area threshold value, while the area ratio threshold value parameter $\beta$ is used as an example of a second area threshold value. The defect candidate specifying unit 72 specifies that the defect candidate in the N-th layer and the defect candidate in the N+1-th layer are located at substantially the same position in a case where the overlapping area ratio RA is the same as or exceeds the first area threshold value ($\alpha$) and also the overlapping area ratio RB with respect to the area of the defect candidate in the N+1-th layer is the same as or exceeds the second area threshold value ($\beta$).

For example, the defect candidate specifying unit 72 defines that the two defect candidates A and B are located at substantially the same position in a case where the following condition (3) is satisfied.

$$RA \geq \alpha \text{ and } RB \geq \beta, \text{ or}$$

$$RA \geq \alpha \text{ and } RB > \beta, \text{ or}$$

$$RA > \alpha \text{ and } RB > \beta, \text{ or}$$

$$RA > \alpha \text{ and } RB \geq \beta...(3)$$

In a case where the conditions of the area ratios RA and RB and the parameters $\alpha$ and $\beta$ are not satisfied in Step S13 (NO in S13), the defect candidate specifying unit 72 determines whether or not conditions of the area ratios RA and RB and a parameter $\gamma$ are satisfied (S15). In a case where it is determined that the conditions of the area ratios RA and RB and the parameter $\gamma$ are satisfied (YES in S15), the defect candidate specifying unit 72 specifies that the two defect candidates A and B are located at substantially the same position (S14).

In FIG. 10, the case where the sizes of the defect candidates A and B are not extremely different from each other has been described. However, the sizes of the defect candidates A and B may be extremely different from each other in actual PBF-AM processing. In order for the defect candidate specifying unit 72 to be able to specify that the defect candidates A and B are located at substantially the same position even in such a case, the area ratio threshold value parameter γ is recorded separately from the area ratio threshold value parameters α and β in the parameter recording unit 81. Here, the parameter γ will be described with reference to FIG. 11.

FIG. 11 is a diagram illustrating an example of the defect candidates A and B with extremely different sizes.

In the example illustrated in FIG. 11, the position of the defect candidate B is a position included inside the defect candidate A, and the defect candidate A is much larger than the defect candidate B. In this case, the above-mentioned area ratio RA is smaller than the area ratio threshold value parameter α while the area ratio RB is greater than the area ratio threshold value parameter β, and the condition (3) is thus not satisfied. However, as can be seen from FIG. 11, the defect candidates A and B are considered to be located at substantially the same position.

Therefore, the area ratio threshold value parameter γ is recorded separately from the area ratio threshold value parameters α and β in the parameter recording unit 81. In a case where the following condition (4) is satisfied and any one of the area ratios RA and RB exceeds the area ratio threshold value parameter γ, the defect candidate specifying unit 72 defines that the two defect candidates are located at substantially the same position irrespective of the other value.

$$RA > \gamma \ \text{or} \ RB > \gamma ...(4)$$

The definition by which the defect candidate specifying unit 72 obtains substantially the same position of two defect candidates using such Equations (1) and (2) and the condition (3) or (4) will be referred to as a "position definition **1**".

After Step S14 or in a case where the defect candidate specifying unit 72 determines that the conditions of the area ratio RA and RB and the parameter γ are not satisfied (NO in S15), the defect candidate specifying unit 72 records the positions and the sizes of the specified defect candidates as defect information in the defect information recording unit 82 (S16) and moves on to Step S5 in FIG. **4.** In Step S5, the defect detection unit 73 performs defect determination processing.

Note that the reason why the defect information is recorded in the defect information recording unit 82 even in the determination of "NO" in Step S15 is because the defect candidates specified at the time of sintering of the yet next layer may overlap the defect candidates of this time.

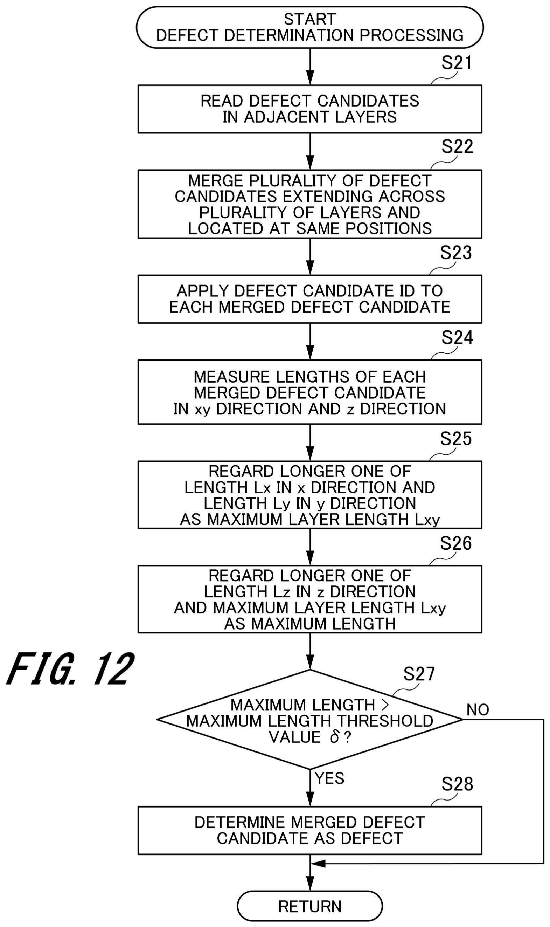

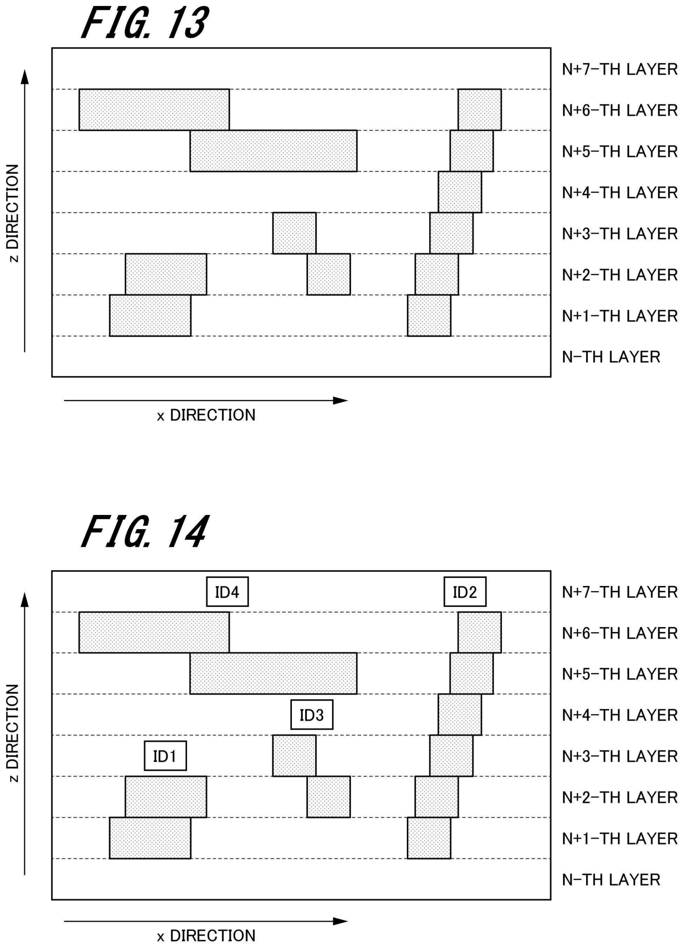

Next, processing in which the defect detection unit 73 detects defects from defect candidates will be explained with reference to FIGS. 12 to 14 by exemplifying an xz sectional view of a part of a shaped object 38 stacked from the N-th layer to the N+7-th layer. FIG. 13 and subsequent drawings illustrate that the defect detection range of the defect detection unit 73 is the first to eighth layers when N is assumed to be 1.

FIG. 12 is a flowchart illustrating an example of the defect determination processing. The defect determination processing is a sub-routine of Step S5 in FIG. 4. In the following description of the flowcharts and the xz sectional views, x, y, and z directions are expressed using lowercase letters for convenience of explanation. However, each direction represents the same direction as each of the X, Y, and Z directions illustrated in FIG. 1 and the like.

First, the defect detection unit 73 reads defect information including defect candidates in adjacent layers from the defect information recording unit 82 (S21). However, the defect detection unit 73 may directly capture defect information output from the defect candidate specifying unit 72.

Next, the defect detection unit 73 merges a plurality of defect candidates located at substantially the same position across a plurality of layers (S22). Then, the defect detection unit 73 applies a defect candidate ID to each merged defect candidate (S23). Here, a specific example of processing in Steps S22 and S23 will be described with reference to FIGS. 13 and 14.

FIG. 13 is a diagram illustrating an example of defect candidates extending across a plurality of layers.

The dashed lines illustrated in the drawing represent boundaries of the layers. Also, rectangular frames sectioned by the solid lines represent defect candidates having occurred in the layers. The defect candidates have already been specified by the defect candidate specifying unit 72.

FIG. 14 is a diagram illustrating an example of defect candidate IDs applied to defect candidates merged by the defect detection unit 73.

The defect detection unit 73 merges defect candidates that extend across a plurality of layers and are located at substantially the same positions in accordance with the above-mentioned position definition 1. The defect detection unit 73 applies a defect candidate ID to each merged defect candidate.

In PBF-AM processing, powder layers are stacked in the order of the N-th layer, the N+1-th layer,.... It has already been determined that a defect candidate specified in the N+1-th layer and a defect candidate specified in the N+2-th layer are located at substantially the same position as defined by the position definition 1 through the processing of the defect candidate specifying unit 72. Therefore, the defect detection unit 73 merges the two defect candidates located at substantially the same positions. Then, the defect detection unit 73 applies defect candidate ID 1 and ID 2 to the defect candidates merged in the N+1-th layer and the N+2-th layer.

The defect detection unit 73 also merges a defect candidate specified in the N+3-th layer located at substantially the same position as a defect candidate specified in the N+2-th layer for the first time, and applies a defect candidate ID 3 to the merged defect candidate. Similarly, the defect detection unit 73 also merges a defect candidate specified in the N+6-th layer located at substantially the same position as a defect candidate specified in the N+5-th layer for the first time, and applies a defect candidate ID 4 to the merged defect candidate. Note that as for the defect candidate IDs that the defect detection unit 73 has applied to the merged defect candidates, the same defect candidate IDs are applied as long as the defect candidates are in continuous layers.

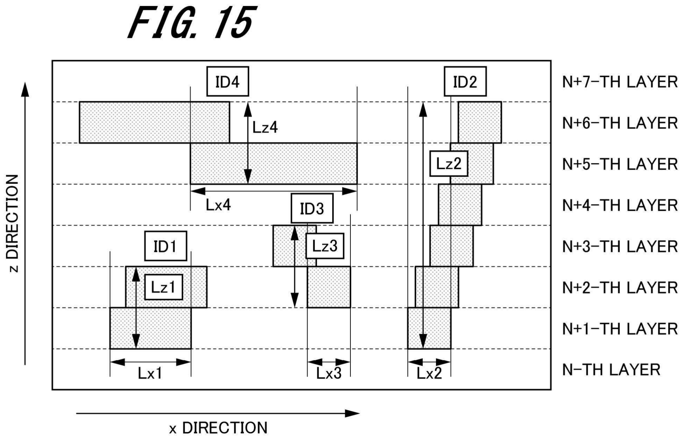

Returning to FIG. 12, the description will be continued. After the defect candidate IDs are applied in Step S23, the defect detection unit 73 measures the lengths of each merged defect candidate in the XY direction and the Z direction (S24). Here, processing in which the defect detection unit 73 measures the lengths in the XY direction and the Z direction will be described with reference to FIG. 15.

FIG. 15 is a diagram illustrating an example in which the defect detection unit 73 measures the lengths of the merged defect candidates in the XY direction and the Z direction.

The defect detection unit 73 measures the length of each merged defect candidate in the XY direction and the length $Lz$ in the Z direction. For example, the defect detection unit 73 measures the length of the merged defect candidate with the defect candidate ID 1 applied thereto in the Z direction as $Lz1$ and measures the length thereof in the X direction as $Lx1$. Note that although FIG. 15 does not illustrate the length in the Y direction, which is the depth direction of the drawing, the defect detection unit 73 measures the length in the Y direction as $Ly1$.

Similarly to the defect candidate with the defect candidate ID 1, the defect detection unit 73 measures the length of the merged defect candidate with the defect candidate ID 2 applied thereto in the Z direction as $Lz2$ and measures the length thereof in the X direction as $Lx2$. Moreover, the defect detection unit 73 measures the length of the merged defect candidate with the defect candidate ID 3 applied thereto in the Z direction as $Lz3$ and measures the length thereof in the X direction as $Lx3$. Also, the defect detection unit 73 measures the length of the merged defect candidate with the defect candidate ID 4 applied thereto in the Z direction as $Lz4$ and measures the length thereof in the X direction as $Lx4$.

In a case where the defect candidate IDs are not distinguished in the following description, the length of a merged defect candidate in the X direction will be referred to as a "length $Lx$", the length thereof in the Y direction will be referred to as a "length $Ly$", and the length thereof in the Z direction will be referred to as a "length $Lz$" by excluding the defect candidate IDs.

Returning to FIG. 12, the description will be continued.

After the processing in Step S24, the defect detection unit 73 calculates the longer length out of the length $Lx$ in the X direction and the length $Ly$ in the Y direction measured for each layer as a "maximum layer length $Lxy$" (S25). The maximum layer length $Lxy$ is the longer one of the maximum layer length $Lx$ max of the defect candidate in the X direction and the maximum layer length $Ly$ max in the Y direction. Here, the maximum layer length $Lx$ max represents the maximum length among the plurality of lengths $Lx$. Also, the maximum layer length $Ly$ max represents the maximum length from among the plurality of lengths $Ly$.

Next, the defect detection unit 73 compares the length $Lz$ in the Z direction with the maximum layer length $Lxy$ and regards the longer one of them as a "maximum length" (S26). Next, the defect detection unit 73 determines whether or not the maximum length exceeds the maximum length threshold value $\delta$ read from a maximum parameter recording unit 81 (S27).

In a case where it is determined that the following condition (5) that the maximum length exceeds the maximum length threshold value $\delta$ is satisfied (YES in S27), the defect detection unit 73 determines the merged defect candidate as a defect (S28) and moves on to the processing in Step S6 in FIG. 4.

$$\text{Maximum length} > \text{maximum length threshold value } \delta \tag{5}$$

On the other hand, in a case where it is determined that the following condition (5) that the maximum length exceeds the maximum length threshold value $\delta$ is not satisfied (NO in S27), the defect detection unit 73 moves on to the processing in Step S6 in FIG. 4 without determining the merged defect candidate as a defect. A merged defect candidate that has not been determined as a defect by the defect detection unit 73 will be continuously referred to as a defect candidate. This is because the defect candidate that has not been regarded as a defect in the determination in Step S27 may be newly determined as a defect by the defect detection unit 73 as a result of the PBF-AM processing on the next and subsequent layers after the defect determination processing illustrated in FIG. 12.

After Step S5 in FIG. 4, the display control unit 74 determines whether or not there has been a user's input operation (S6). In a case where it is determined that there has been a user's input operation (YES in S6), the display control unit 74 moves on to processing in Step S7 and performs display control processing. On the other hand, in a case where it is determined that there has been no user's input operation (NO in S6), the display control unit 74 moves on to processing in Step S8.

Here, the display control processing (the processing in Step S7) to which the processing moves on in a case where it is determined that there has been a user's input operation in Step S6 will be described.

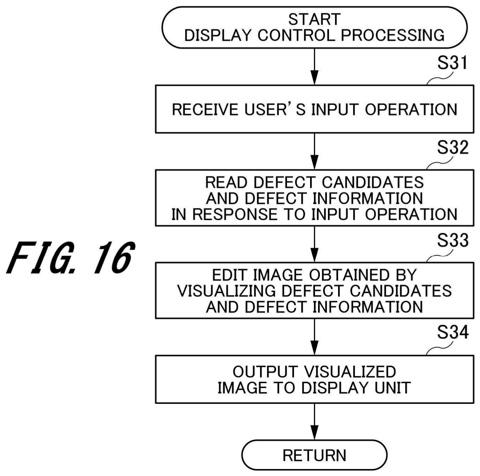

FIG. 16 is a flowchart illustrating an example of the display control processing. The display control processing is a sub-routine of Step S7 in FIG. 4.

First, the display control unit 74 receives a user's input operation (S31). Next, the display control unit 74 reads defect candidates and defect information from the defect information recording unit 82 in response to the input operation (S32).

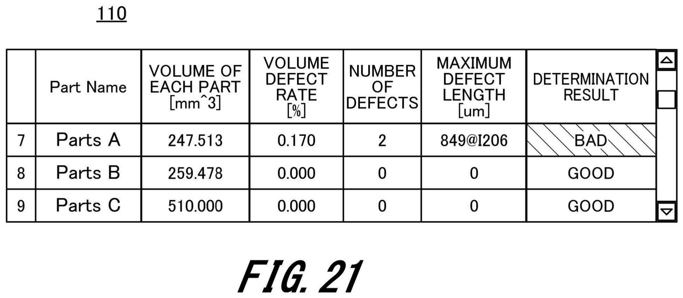

Next, the display control unit 74 edits an image obtained by visualizing the defect candidates and the defect information (S33). At this time, the display control unit 74 performs display control processing of editing an image of 2D or 3D display of the defect candidates and defect information and an image showing various kinds of information as a graph and generating a screen that can be displayed on the display unit 90. Note that the display control unit 74 may generate a table of defect detection results (referred to as a result table) including the defect information determined for each layer and information including a progress of the PBF-AM processing on the shaped object 38 on the basis of the layer data. The result table will be described later with reference to FIG. 21.

Next, the display control unit 74 performs control such that the visualized image can be displayed on the display unit 90 in the middle of the PBF-AM by outputting the image visualized in Step S33 to the display unit 90 (see FIG. 3) (S34). Thereafter, the display control unit 74 moves on to the processing in Step S8 in FIG. 4. As the image visualizing the defect candidates and the defect information, a screen including an image obtained by shaping a plurality of stacked layers in a three-dimensional image and a graph of defect information for each layer, for example, is displayed on the display unit 90. Also, the defects determined by the defect detection unit 73 are displayed on the display unit 90 as error information. Therefore, the user can check the defect candidates and the defect information online even in the middle of the PBF-AM.

The description returns to FIG. 4.

After the processing in Step S7 in FIG. 4, or after determination of "NO" in Step S6, the shaping control unit 71 determines whether or not the PBF-AM on the last layer has been completed (S8). In a case where it is determined that the PBF-AM on the last layer has not been completed (NO in S8), the shaping control unit 71 returns to Step S1, counts up m of the m-th layer, and continues the PBF-AM, the defect candidate specifying processing, the defect determination processing, and the display control processing on the subsequent layers. In the defect determination processing, the processing of merging defect candidates and determining defects using layer data of layers on which the PBF-AM processing has been performed until m of the m-th layer is counted up is repeated until the PBF-AM on the last layer is completed.

On the other hand, in a case where it is determined that the PBF-AM on the last layer has been completed (YES in S8), the shaping control unit 71 ends the defect detection processing illustrated in FIG. 4.

The defect detection method according to the first embodiment described above will be referred to as a "detection method 1". Note that the above-mentioned parameters $\alpha$, $\beta$, $\gamma$, and $\delta$ may be changed every time PBF-AM is performed or may be fixed once determined. Also, parameter values may be changed depending on the type of powder to be used for the PBF-AM processing.

In the defect detection method according to the first embodiment, a merged defect candidate is determined to be defect in a case where a longer one of the maximum length $Lz$ and the maximum length $Lxy$ of the merged defect candidate is greater than the maximum length threshold value $\delta$. Since such a defect formed to have a long length in the stacking direction remains in the shaped object 38 after completion of the shaping with a high probability, it is possible to take a measure of stopping the PBF-AM processing of the shaped object 38 in which the defect has been detected or the like even in the middle of the PBF-AM. It is possible to prevent consumption and the like of materials and electric power caused by performing unnecessary PBF-AM processing, by taking such a measure.

In the related art, only XY section data of layers for which defect detection is to be performed is used for the layers for which the defect detection is to be carried out. Therefore, regardless of the fact that there may be a case where a defect having been detected in a certain layer disappears with progress of PBF-AM processing, remaining of the defect in the shaped object 38 is erroneously detected by the defect detection method in the related art. On the other hand, in the present embodiment, XY section data of layers to be stacked after the layers for which defect detection is to be performed is also used for the defect detection, in addition to the XY section data of the layers for which the defect detection is to be performed. Therefore, a defect candidate that has disappeared after a plurality of layers are stacked is not erroneously detected as a defect. As a result, accuracy of the detection of defects remaining in the shaped object 38 can be enhanced.

Further, since information regarding defects determined in the middle of the PBF-AM is displayed on the display unit 90, the user can check the status of the defects, shapes of defect candidates for the defects, and the like. Therefore, the user can redo the PBF-AM processing, resetting of various parameters, or the like in an early stage after the defects are determined and can obtain the intended shaped object 38.

Note that although the example in which the display control processing in Step S7 in FIG. 4 is performed as online real-time processing has been described as the defect detection method according to the first embodiment (detection method 1), the display control processing may be performed after the shaping processing. In this case, the display control processing in Step S7 is performed alone in response to a user's input operation. Furthermore, the display control processing may be performed by an external server (such as a cloud server) that is different from the three-dimensional PBF-AM apparatus 1. In this case, a user at a location that is different from a facility where the three-dimensional PBF-AM apparatus 1 is installed can check the result of the PBF-AM processing.

The defect candidate indicated by the defect candidate ID 2 in FIG. 15 has a shape in which defect candidates continue across multiple layers at substantially the same position. Defect candidates are not limited to ones with such a shape and may be branched in the middle. Also, two defect candidates specified in a certain layer may be connected in the next stacked layer. Even defect candidates with such various shapes can be reliably detected by the defect detection method according to the present embodiment as long as the defects affect quality of the shaped object 38.

1-6. Example of Shaping Control Processing

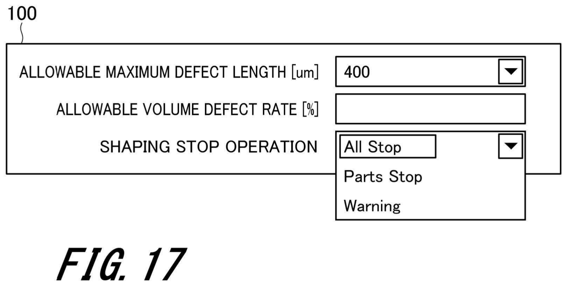

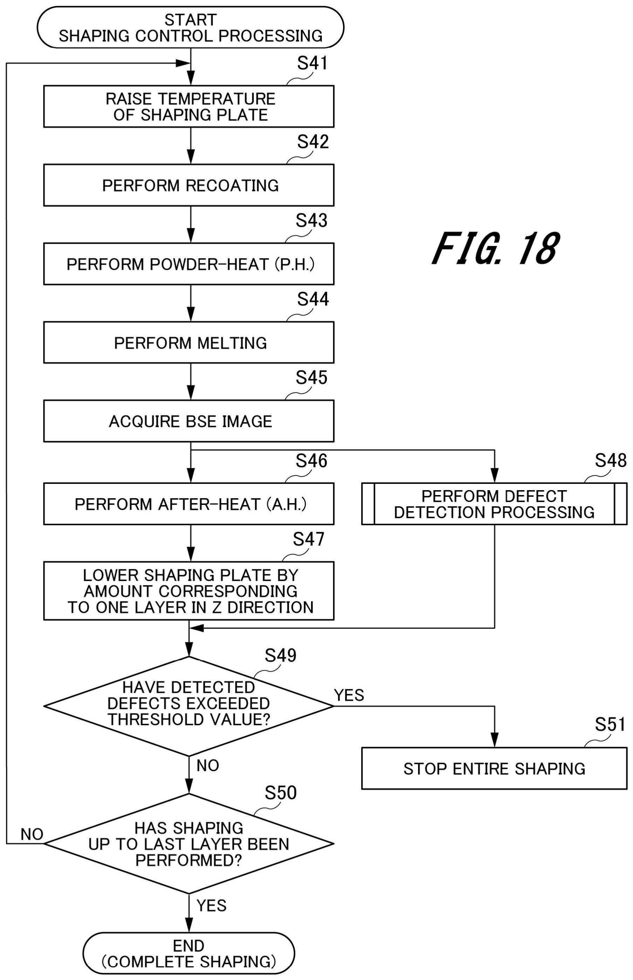

Next, an example of the shaping control processing will be described with reference to the explanatory diagram in FIG. 17 and the flowchart in FIG. 18. First, a GUI screen for setting content of shaping control at the time of defect detection will be described before the shaping control processing is described.

FIG. 17 is a diagram illustrating an example of a GUI screen for setting content of the shaping control content in a case where defects detected by the defect detection processing illustrated in FIG. 4 exceed a threshold value.

A setting screen 100 illustrated in FIG. 17 is an example of a GUI screen having items of an allowable maximum defect length [$\mu$m], an allowable volume defect rate [%], and a shaping stop operation. The user can operate the input device 56 illustrated in FIG. 2 to input a threshold value to each of the items of the allowable maximum defect length [$\mu$m] and the allowable volume defect rate [%]. The user inputs threshold values to be used to determine a problem in terms of quality. Although the threshold value for the allowable maximum defect length is assumed to be equal to or greater than the maximum length threshold value $\delta$ in Step S27 illustrated in FIG. 12, the threshold value may be the same value as the maximum length threshold value $\delta$. In FIG. 17, 400 [$\mu$m] is set as the threshold value for the allowable maximum defect length, and the threshold value for the allowable volume defect rate is not set.

Note that although the allowable maximum defect length and the volume defect rate are adopted as threshold values in this example, the threshold values are not necessarily limited to these, and other threshold values may be freely adopted. Examples of the other threshold values include the number of defects. Alternatively, the entire shaping processing may be stopped in a case where defects have occurred in a predetermined rate of shaped objects, for example, 80% of shaped objects from among a plurality of shaped objects for which shaping processing is performed at the same time.

The item of the shaping stop operation is an item for setting the content of control to be executed by the PC 54 in relation to the PBF-AM processing in a case where the size of a defect exceeds a preset threshold value in the middle of the PBF-AM. In this example, the PC 54 is caused to execute control to stop at least the PBF-AM on a shaped object from which the defect has been detected or to output a warning. For example, stopping of entire shaping (All Stop), stopping of shaping of only the corresponding shaped object (Parts Stop), and only displaying of a warning message (Warning) are prepared as options for content of control of the shaping stop operation. The user can set the content of control of the PBF-AM executed when a defect is detected in the middle of the PBF-AM by selecting an option by operating a pull-down button. FIG. 17 illustrates an example in which stopping of entire shaping (All Stop) has been selected.

In this manner, the display control unit 74 according to the present embodiment performs control such that first control to third control can be displayed on the display unit as options for the shaping control in a case where the size of a defect exceeds the preset threshold value in the middle of the PBF-AM. For example, the first control is "stopping of entire shaping" of stopping the PBF-AM for all the shaped objects. The second control is "stopping of only the corresponding shaped object" of stopping the PBF-AM for the shaped object from which the defect has been detected and continuing the PBF-AM for the remaining shaped objects.

Furthermore, the third control is "only displaying of a warning message" of outputting a warning indicating that the defect has been detected.

Next, the shaping control processing according to the first embodiment of the present invention will be described.

FIG. 18 is a flowchart illustrating an example of the shaping control processing according to the first embodiment. In the following description, only operations of parts related to shaping control that are different from those in the related art will be described, and the parts related to the other shaping process will be simply described or omitted since they are the same as those described in the section of the related art. The PC 54 (shaping controlling software) of this example performs defect detection in real time during the PBF-AM of the shaped object 38 and executes the content of control of the shaping stopping operation set on the setting screen 100 at the time of defect detection. Here, it is assumed that "stopping of entire shaping (All Stop)" has been set on the setting screen 100.

First, after one layer of the shaped object is shaped, the shaping control unit 71 illustrated in FIG. 3 raises the temperature of the shaping plate 22 by the beam irradiation device 2 for shaping the next layer (S41). Next, the shaping control unit 71 spreads the powder material 32 on the shaping plate 22 by the powder supply device 16 (hereinafter, referred to as "recoating") (S42). Next, the shaping control unit 71 performs powder-heat (P.H.) on the powder layer on the shaping plate 22 by the beam irradiation device 2 to presinter the powder material 32 (S43). Next, the shaping control unit 71 melts and solidifies the powder material 32 in accordance with the two-dimensional shape of the shaped object by the beam irradiation device 2 (S44).

Next, the shaping control unit 71 acquires a BSE image of the shaped surface 32a by detection units 46 (S45). Next, the shaping control unit 71 performs after-heat (A.H.) on the powder material 32 on the shaping plate 22 by the beam irradiation device 2 to prepare for spreading the powder material 32 (S46). Next, the shaping control unit 71 causes the inner base 24 to move by the plate moving device 26 and lowers the shaping plate 22 by the amount corresponding to one layer in the Z direction (S47).

In parallel with the processing in Steps S46 and S47, the defect detection unit 73 executes the defect detection processing illustrated in FIG. 4 (S48). The defect detection unit 73 outputs the result of the defect detection processing to the shaping control unit 71.

In a case where the result of the defect detection processing in Step S48 indicates that there has been a defect after the processing in Step 47, the shaping control unit 71 refers to the threshold values set on the setting screen 100 illustrated in FIG. 17. Then, the shaping control unit 71 determines whether or not the detected defect state exceeds a threshold value (S49). In a case where the result of the defect detection processing in Step S48 indicates that there has been no defect, the shaping control unit 71 branches to No in Step S49 without performing determination processing.

In a case where the detected defect state is equal to or less than the threshold value (NO in S49), the shaping control unit 71 determines whether or not the PBF-AM has been performed up to the last layer (S50). In a case where the PBF-AM has been performed up to the last layer (YES in S50), the shaping control unit 71 ends the PBF-AM since the shaped object 38 has been completed.

On the other hand, in a case where the PBF-AM has not been performed up to the last layer (NO in S50), the shaping control unit 71 moves on to Step S41 and performs shaping processing of the next layer.

In a case where the defect state exceeds the threshold value in Step S49 described above (YES in S49), the shaping control unit 71 performs control to immediately stop the shaping processing of all the shaped objects in accordance with the content of control of "stopping the entire shaping" set in the shaping stopping operation on the setting screen 100 (S51). The stopping of the shaping processing of all the shaped objects may be displayed in the result table in FIG. 21 in the case where the shaping processing is stopped.

Note that in a case where two threshold values have been set on the setting screen 100, the shaping may be stopped when the defect state exceeds the two threshold values in Step S49, or the shaping may be stopped when the defect state exceeds any one of the two threshold values.

In the shaping control processing according to the first embodiment described above, the shaping processing of all the shaped objects is stopped in a case where occurrence of a problematic defect is observed in the middle of the PBF-AM processing. It is thus possible to prevent a great loss of time and cost in the production process of the shaped object in advance.

In the flowchart illustrated in FIG. 18, the defect detection, the threshold value checking, and the stopping of the entire shaping in a case where defects exceed the threshold value are completed before recoating of the next layer is carried out. However, a calculation time required for the defect detection may increase depending on performance of the PC 54, the number of defects, and the like in practice, and there may be a case where the processes up to the stopping of the entire shaping are not completed before the recoating of the next layer. Therefore, the processing illustrated in FIG. 18 is just an example, and the series of processes including the defect detection, the threshold value checking, and the stopping of the entire shaping in the case where defects exceed the threshold value may not necessarily be completed before the recoating of the next layer and may be slightly delayed in practice.


[2. Second Embodiment]


Next, shaping control processing according to a second embodiment of the present invention will be described.

The shaping control processing according to the second embodiment is performed using the three-dimensional PBF-AM apparatus 1 and the control unit 70 and the recording unit 80 in the PC 54 according to the first embodiment. In the shaping control processing according to the second embodiment, the same processing as that in Steps S41 to S43 and Step S45 to S50 in FIG. 18 according to the first embodiment is performed. In the shaping control processing according to the second embodiment, processing achieved by changing Steps S44 and S51 in FIG. 18 according to the first embodiment is performed. Here, it is assumed that "stopping of shaping of only corresponding shaped objects (Parts Stop)" has been set on the setting screen 100.

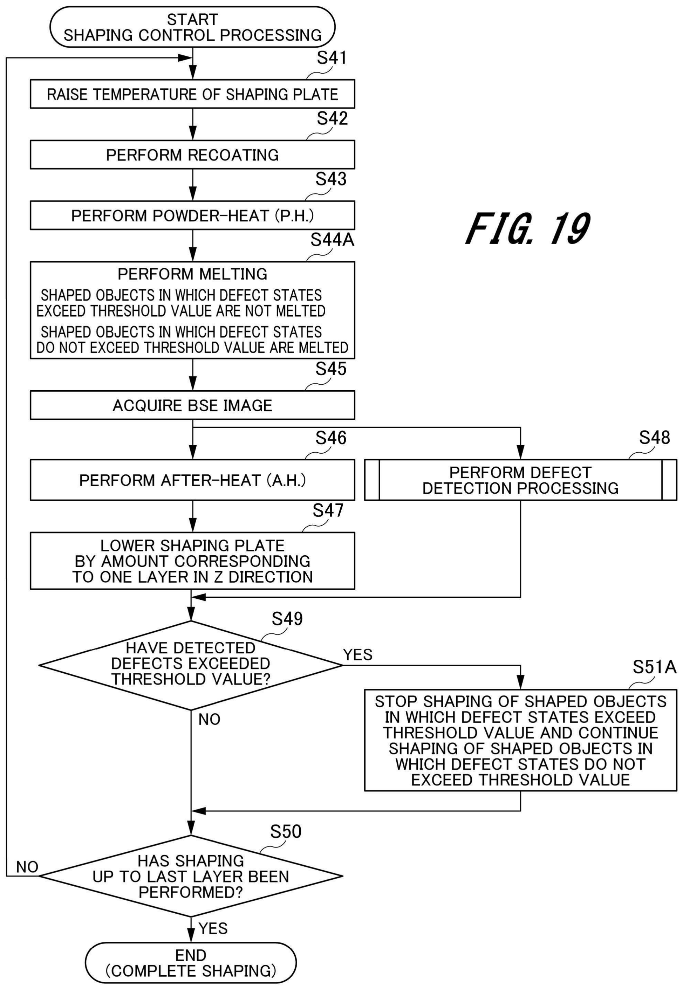

FIG. 19 is a flowchart illustrating an example of the shaping control processing according to the second embodiment.

The shaping control unit 71 executes the processing from the temperature raising of the shaping plate 22 (S41) to the powder-heat (P.H.) (S43).

Next, in a case where no defects have been detected in the previous defect detection processing (S48), the shaping control unit 71 melts and solidifies a powder material 32 in accordance with a two-dimensional shape of a shaped object similarly to Step S44 in FIG. 18 (S44A).

Next, the shaping control unit 71 executes the processing from the acquisition (S45) of the BSE image to the lowering of the shaping plate 22 by the amount corresponding to one layer in the Z direction (S47). In parallel with the processing in Steps S46 and S47, the defect detection unit 73 executes the defect detection processing illustrated in FIG. 4 (S48) and outputs the result of the defect detection processing to the shaping control unit 71.

In a case where the result of the defect detection processing in Step S48 indicates that there has been a defect, the shaping control unit 71 refers to the threshold value set on the setting screen 100 illustrated in FIG. 17. Then, the shaping control unit 71 determines whether or not the detected defect state exceeds a threshold value (S49).

In a case where there is a shaped object in which the detected defect state exceeds the threshold value (YES in S49), the shaping control unit 71 performs control to immediately stop the shaping processing of only the corresponding shaped object in accordance with the content of control "stopping the shaping of only the corresponding shaped object" set in the shaping stop operation on the setting screen 100 (S51A). The shaping processing is continued for shaped objects in which defect states do not exceed the threshold value. It is preferable to display that the shaping processing of the corresponding shaped object has been stopped in the result table in FIG. 21 in a case where the shaping processing is stopped. For example, the user may determine to stop all the shaped objects on the basis of the result table if the number of shaped objects for which the shaping is to be stopped increases.

In a case where the detected defect state is equal to or less than the threshold value (NO in S49), or after the processing in Step S51A, the shaping control unit 71 determines whether or not the PBF-AM has been performed up to the last layer (S50). In a case where the PBF-AM has been performed up to the last layer (YES in S50), the shaping control unit 71 ends the PBF-AM.

On the other hand, in a case where the PBF-AM has not been performed up to the last layer (NO in S50), the shaping control unit 71 moves on to Step S41 and performs the shaping processing of the next layer. Then, the shaping control unit 71 executes the processing in Steps S41 to S43.

Next, in a case where defects have been detected in the previous defect detection processing (S48) after the processing in Step S43, the shaping control unit 71 melts and solidifies the shaped objects in which the defect states do not exceed the threshold value (S44A). At this time, the shaping control unit 71 does not melt the shaped objects in which the defect states exceed the threshold value.

Next, the shaping control unit 71 executes the processing in Steps S45 to S50 and executes the control content "stopping of shaping of only corresponding shaped objects " set in the shaping stop operation on the setting screen 100 as needed (in a case of determination of "YES" in Step S49) (S51A). Thereafter, the shaping control unit 71 ends the PBF-AM in a case where the PBF-AM has been performed up to the last layer (YES in S50).

In the shaping control processing according to the above-mentioned second embodiment, the shaping of only the corresponding shaped object is stopped in a case where occurrence of a problematic defect is observed in the middle of the PBF-AM processing. It is thus possible to prevent a great loss of time and cost in the production process of the shaped object caused by shaping the shaped object including the problematic defect in advance. Furthermore, since the shaping processing is continued for the shaped objects in which no problematic defects have occurred, it is possible to use the shaped objects with no problems in terms of quality without discarding them as compared with control in which the entire shaping processing is uniformly stopped as in the first embodiment.

Furthermore, in a case of an operation of displaying that the shaping processing of the corresponding shaped object has been stopped in the result table of FIG. 21, the user can be aware of an abnormality of the three-dimensional PBF-AM apparatus 1 from the result table when the number of shaped objects for which the shaping processing is to be stopped has increased. Therefore, the user can input a command to stop the shaping processing of all the shaped objects to the PC 54 once the user determines that the number of shaped objects for which the shaping processing is to be stopped has increased. Alternatively, when the number of shaped objects for which the shaping process is to be stopped is displayed, and the corresponding shaped objects have increased to a specific number or more or a specific rate or more, a warning may be displayed in the result table.

In the flowchart illustrated in FIG. 19, the defect detection, the threshold value checking, and the stopping of the shaping in a case where the defects exceed the threshold value are completed before the recoating of the next layer is carried out. However, a calculation time required for the defect detection may increase depending on performance of the PC 54, the number of defects, and the like in practice, and there may be a case where the processes up to the stopping of the shaping are not completed before the recoating of the next layer. Therefore, the processing illustrated in FIG. 19 is just an example, and the series of processes including the defect detection, the threshold value checking, and the stopping of the shaping of the corresponding shaped objects in the case where defects exceed the threshold value may not necessarily be completed before the recoating of the next layer and may be slightly delayed in practice.

[3. Third Embodiment]

Next, shaping control processing according to a third embodiment of the present invention will be described.
The shaping control processing according to the third embodiment is performed using the three-dimensional PBF-AM apparatus 1 and the control unit 70 and the recording unit 80 in the PC 54 according to the first embodiment. In the shaping control processing according to the third embodiment, the same processing as those in Steps S41 to S50 in FIG. 18 according to the first embodiment is performed. In the shaping control processing according to the third embodiment, processing achieved by changing Step S51 in FIG. 18 according to the first embodiment is performed. Here, it is assumed that "only displaying of a warning message (Warning)" has been set in the setting screen 100.

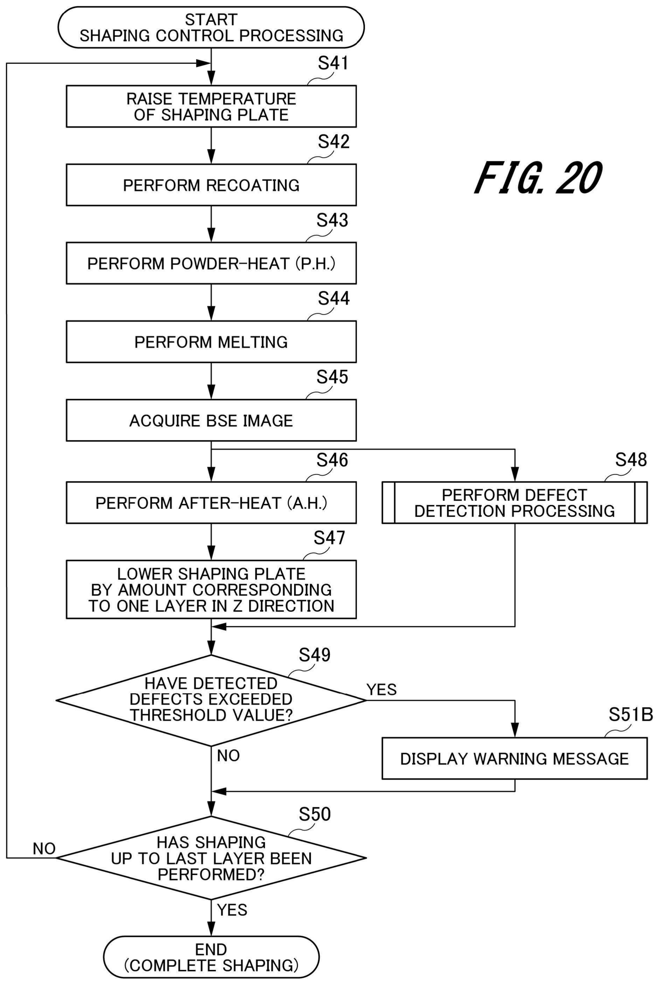

FIG. 20 is a flowchart illustrating an example of the shaping control processing according to the third embodiment.

Next, the shaping control unit 71 executes the processing from the temperature raising of the shaping plate 22 (S41) to the lowering of the shaping plate 22 by the amount corresponding to one layer in the Z direction (S47). In parallel with the processing in Steps S46 and S47, the defect detection unit 73 executes the defect detection processing illustrated in FIG. 4 (S48) and outputs the result of the defect detection processing to the shaping control unit 71.

In a case where the result of the defect detection processing in Step S48 indicates that there has been a defect, the shaping control unit 71 refers to the threshold value set on the setting screen 100 illustrated in FIG. 17. Then, the shaping control unit 71 determines whether or not the detected defect state exceeds a threshold value (S49).

In a case where there is a shaped object in which the detected defect state exceeds the threshold value (YES in S49), the shaping control unit 71 performs control to display a warning message on the display unit 90 in accordance with the content of control "only displaying of a warning message" set in the shaping stop operation on the setting screen 100 (S51B).

At this time, the shaping processing of the corresponding shaped object is continued. It is preferable to display the defect state of the corresponding shaped object in the result table in FIG. 21 in a case where the defect state exceeds the threshold value. For example, the user may determine to stop the shaping processing of the corresponding shaped object or all the shaped objects and input a stop command to the PC 54 on the basis of the result table if the number of shaped objects with defects exceeding the threshold value has increased.

In a case where the detected defect state is equal to or less than the threshold value (NO in S49), or after the processing in Step S511B, the shaping control unit 71 determines whether or not the PBF-AM has been performed up to the last layer (S50). In a case where the PBF-AM has been performed up to the last layer (YES in S50), the shaping control unit 71 ends the PBF-AM.

On the other hand, in a case where the PBF-AM has not been performed up to the last layer (NO in S50), the shaping control unit 71 moves on to Step S41 and performs the shaping processing of the next layer. Then, the shaping control unit 71 executes the processing in Steps S41 to S51B.

In the shaping control processing according to the third embodiment described above, the warning message is displayed and the shaping processing of the shaped object is continued in a case where occurrence of the problematic defect is observed in the middle of the PBF-AM processing. Therefore, the user can pay attention to the continued shaping processing of the shaped object by the warning message, and the user can determine whether to stop or continue the shaping processing of the shaped object. Therefore, the present embodiment can provide an environment in which the user can perform an operation to stop the shaping processing of the shaped object while continuing the shaping processing of the shaped object even in the case where a problematic defect has occurred in the shaped object. It is thus possible to prevent a great loss of time and cost in the production process of the shaped object in advance.

In the flowchart illustrated in FIG. 20, the defect detection, the threshold value checking, and the displaying of a warning message in a case where defects exceed the threshold value are completed before recoating of the next layer is carried out. However, a calculation time required for the defect detection may increase depending on performance of the PC 54, the number of defects, and the like in practice, and there may be a case where the processes up to the displaying of the warning message are not completed until the recoating of the next layer. Therefore, the processing illustrated in FIG. 20 is just an example, and the series of processes including the defect detection, the threshold value checking, and the displaying of the warning message in the case where defects exceed the threshold value may not necessarily be completed before the recoating of the next layer and may be slightly delayed in practice.

As described above, the information processing apparatus (PC 54) according to the first to third embodiments includes: the defect candidate specifying unit that detects failure locations having occurred in layers, by which the PBF-AM of the shaped objects is performed, as defect candidates for each of the layers and specifies a plurality of defect candidates located at substantially the same positions in the plurality of layers that are adjacent in the stacking direction on the basis of the layer data obtained for each layer; the defect detection unit that detects defects remaining in the shaped objects on the basis of the sizes of the plurality of defect candidates, which are located at substantially the same positions and are specified in the plurality of layers, in the stacking direction and the sizes inside the layers; and the shaping control unit that performs control to stop at least the PBF-AM of the shaped objects, from which the defects have been detected, or output a warning in a case where the sizes of the defects exceed a preset threshold value in the middle of the PBF-AM.

Here, FIG. 21 is a diagram illustrating a display example of a result table display screen 110 displaying the result table.

The result table generated by the display control unit 74 in Step S33 in FIG. 16 is displayed on the result table display screen 110. The result table includes items of shaped object names (Part Name), shaped object volumes [mm$^3$],

volume defect rates [%], the numbers of defects, maximum defect lengths [μm], and determination results.

The shaped object names are identification names given to the shaped objects 38.

The shaped object volumes represent the volumes of the shaped objects 38 at the timing at which the PBF-AM is completed as assumed from shaping data.

The volume defect rates represent the rates of the volumes of the defects detected in the shaped objects 38 with respect to the volumes of the entire shaped objects 38 at the timing at which the PBF-AM is completed as assumed from shaping data.

The numbers of defects represent the numbers of defects detected in the shaped objects 38.

The maximum defect lengths represent the maximum lengths of the defects detected in the shaped objects 38. The left side separated by an at mark represents the maximum length of the defects, and the right side represents the number of stacked layers (layer numbers) in which the defects have occurred. Note that even if the current number of stacked layers in the PBF-AM is 1300, the number of stacked layers (1206) in which the maximum length has been determined is displayed on the result table display screen 110.

The determination results represent the results of the PBF-AM processing of the shaped objects 38. Although it is typically desirable that the volume defect rates be less than 0.1%, for example, "BAD" is displayed in the item of the determination results in a case where the volume defect rates exceed 1%, for example.

In the result table, "BAD" is displayed in the item of the determination results in a case where abnormal values are included in important information (the numbers of defects, the maximum defect lengths, and the like) related to the defects in the shaped objects or in a case where defects have occurred in the PBF-AM performed until the user checks the result table. Although the threshold value to be used for the defect determination is assumed to be the maximum length threshold value δ as described above, the threshold value to be used may be a threshold value of the allowable maximum defect length or the allowable volume defect rate set on the setting screen 100. It is necessary to stop the PBF-AM processing for the shaped objects 38 in which the defects have occurred, and to discard and recreate them. Therefore, only information regarding the shaped objects 38 for which BAD is displayed in the item of the determination results may be displayed on the result table display screen 110. Alternatively, STOP may be displayed in the determination results for the corresponding shaped objects such that it is possible to recognize that the PBF-AM processing has been stopped at a glance.

On the other hand, in a case where the PBF-AM progresses with no problems, GOOD is displayed in the item of the determination results. Note that the display control unit 74 may generate a screen in which the color of the letters of "BAD" is red or cells including "BAD" are displayed with a red color in order to make it easy for the user to visually recognize the display of "BAD". The user can check whether or not there is a problem in terms of quality caused by defects in the shaped objects 38, for which the PBF-AM processing is currently progressing in real time in the middle of the PBF-AM by "GOOD" or "BAD" being displayed in the item of the determination results.

Note that the result table display screen 110 is configured to display, as a graphical user interface (GUI), five items, namely the shaped object volumes, the volume defect rates, the numbers of defects, the maximum defect lengths, and the determination results. However, the items to be displayed on the result table display screen 110 may not necessarily be limited to these five items, and other items may be added. Conversely, items considered to be unnecessary may be deleted. In addition, the colors of the letters of "BAD" to be displayed in the item of the determination results may not be changed and may be the same as the color of the letters of "GOOD".

[4. Fourth Embodiment]

Next, shaping control processing according to a fourth embodiment of the present invention will be described.

The shaping control processing according to the fourth embodiment is an example of appropriately changing the melting order of the remaining shaped objects in a case where the PBF-AM is continued (the determination of NO in S50 in FIGS. 19 and 20) in the second and third embodiments. The shaping control processing according to the fourth embodiment is performed using the three-dimensional PBF-AM apparatus 1 and the control unit 70 and the recording unit 80 in the PC 54 according to the first embodiment.

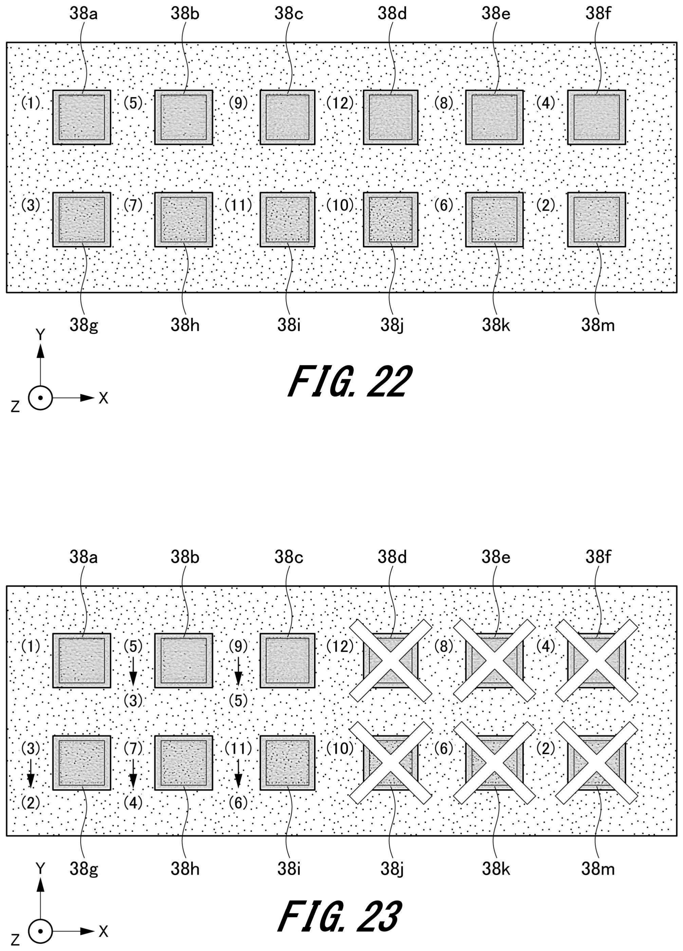

FIG. 22 is a diagram illustrating an example of a BSE image of a top view of a plurality of shaped objects in the middle of PBF-AM from the Z direction and a melting order of the plurality of shaped objects;

FIG. 23 is a diagram illustrating an example in the related art in which shaping processing of some of shaped objects is stopped in the middle of PBF-AM and a melting order of remaining shaped objects is changed.

In the second embodiment, in a case where there are shaped objects in which detected defect states exceed the threshold value, the shaping processing of only the shaped objects determined to include the defects exceeding the threshold values is immediately stopped. The shaping is continued for the remaining shaped objects.

A case where the melting order is changed by the error shaped objects being removed from melting targets when the remaining shaped objects are melted and influences of thermal diffusion are changed as a result is conceivable. In order to avoid such a change in thermal diffusion as much as possible, the melting order is changed to an appropriate order in the remaining shaped objects that are to be continuously melted.

As a specific example, a case as illustrated in FIG. 22 will be exemplified. In the BSE image illustrated in FIG. 22, twelve shaped objects 38a to 38m are observed. The number in parentheses displayed on the left side of each shaped object indicates the melting order. The first melting order is the order of shaped objects 38a, 38m, 38g, 38f, 38b, 38k, 38h, 38e, 38c, 38j, 38i, and 38d (first to twelfth). In a case where the shaping of the shaped objects 38m, 38f, 38k, 38e, 38j, and 38d (the second, fourth, sixth, eighth, tenth, and twelfth) is determined to be stopped as a result of defect detection, for example, the melting order illustrated in FIG. 23 is achieved if melting is performed in the order obtained by simply excluding the shaped objects for which the shaping is to be stopped.

In other words, the melting order of the remaining shaped objects is the order of the shaped objects 38a, 38g, 38b, 38h, 38c, and 38i (first to sixth).

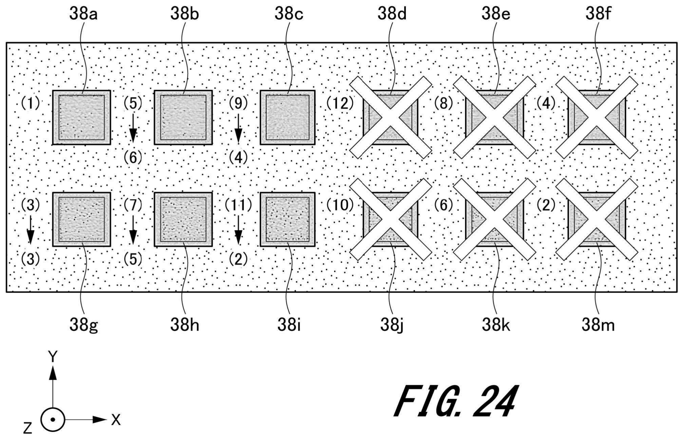

However, since the adjacent shaped objects are melted in order in this case, the trend that the shaped objects to be melted are affected by heat generated when adjacent shaped objects are melted increases. Therefore, the influence of the thermal diffusion is expected to change before and after the stopping of the shaping of some of the shaped objects as a result of the defect detection. Therefore, it is desirable to change the melting order to an appropriate order among the shaped objects that are to be continuously melted as illustrated in FIG. 24.

FIG. 24 is a diagram illustrating an example in which shaping processing of some of shaped objects is stopped in the middle of PBF-AM and the melting order of the remaining shaped objects is changed to an appropriate order according to the present embodiment.

As an algorithm for realizing such a changed order, the following example is conceivable.

(A) The coordinates of the center of gravity each of all the shaped objects as targets for which the PBF-AM is to be continued are obtained.

(B) A shaped object to be melted first is designated from among the remaining shaped objects. The shaped object positioned as far as possible from a melting area of the shaped surface 32a (FIG. 1) of the powder layer is designated (the shaped object 38a(1) in FIG. 24).

(C) All distances between the coordinates of the center of gravity of the shaped object to be melted first and the coordinates of the centers of gravity of all the remaining shaped objects are derived, and coordinates at the longest distance from the distances are obtained. The shaped object including the coordinates of the center of gravity is determined as a shaped object to be melted secondly (the shaped object 38i(2) in FIG. 24).

(D) Once the shaped object to be melted secondly is determined, all the distances between the coordinates of the center of gravity of the shaped object to be melted secondly and the centers of gravity of all the shaped objects except for the shaped objects melted before then are derived, and coordinates at the longest distance from among the distances are obtained. The shaped object including the coordinates of the center of gravity is determined as a shaped object to be melted thirdly (the shaped object 38g(3) in FIG. 24).

(E) The above-mentioned process (D) is repeated. In other words, once the shaped object to be melted in the n-th order is determined, all the distances between the coordinates of the center of gravity of the shaped object to be melted in the n-th order and the centers of gravity of all the shaped objects except for the shaped objects melted before then are derived, and the coordinates at the longest distance from among the distances are obtained. The shaped object including the coordinates of the center of gravity is determined as a shaped object to be melted in the n+1-th order.

The algorithm including (A) to (E) described above is applied before shaping to determine the melting order of the remaining shaped objects. If a defect is detected during shaping, and shaping of the corresponding shaped object is determined to be stopped, the algorithm including (A) to (E) is operated again for the remaining shaped objects except for the shaped object for which shaping is determined to be stopped, without performing melting in the originally determined order (FIG. 23) with the shaped object, for which shaping is determined to be stopped, simply excluded. In a case where the melting order is changed in this manner, the shaping control unit 71 performs the melting in the changed order (FIG. 24).

As described above, in the fourth embodiment, the shaping control unit 71 designates the shaped object that is the furthest from the shaped object to be melted first after the PBF-AM is continued as a shaped object to be melted next for the remaining shaped objects in a case where the PBF-AM of the remaining shaped objects except for the shaped object from which the defect has been detected is continued. Thereafter, the shaping control unit 71 repeats the processing of designating the shaped object that is the furthest from the shaped object to be melted immediately before as the shaped object to be melted next for the shaped objects for which the melting order has not been designated, thereby determining the melting order.

When the PBF-AM of the shaped objects that do not include any defects is continued, the shaped objects to be melted are unlikely to be affected by heat generated when the adjacent shaped objects are melted by changing the melting order of the remaining shaped objects to such a melting order. Therefore, it is possible to appropriately shape the shaped objects for which the PBF-AM is continued.

Note that the above-described algorithm is merely an example, and another algorithm may be used to determine the melting order.

[5. Fifth Embodiment]

Next, a defect detection method according to a fifth embodiment of the present invention will be described.

The defect detection method according to the fifth embodiment is performed using the three-dimensional PBF-AM apparatus 1 and the control unit 70 and the recording unit 80 in the PC 54 according to the first embodiment. In the defect detection method according to the fifth embodiment, the same processing as that in Step S1 in FIG. 4 to Step S26 in FIG. 12 according to the first embodiment is performed.

In the fifth embodiment, maximum length threshold values $\delta z$ and $\delta xy$ to be used by the defect detection unit 73 to determine defects are recorded in the parameter recording unit 81. Then, the defect detection unit 73 detects a merged defect candidate as a defect in a case where the maximum length is the stacking direction length Lz and the stacking direction length Lz exceeds the maximum length threshold value $\delta z$ in the stacking direction or in a case where the maximum length is the maximum layer length Lxy and the maximum layer length Lxy exceeds the maximum layer length threshold value $\delta xy$ inside the layers.

For example, the defect detection unit 73 compares the maximum length Lz with the threshold value $\delta z$ in the case where the maximum length is Lz in Step S27 (see FIG. 12) of the defect detection method according to the fifth embodiment. In a case where it is determined that the maximum length Lz is longer than the threshold value $\delta z$, the defect detection unit 73 moves on to Step S28 and determines the merged defect candidate as a defect.

On the other hand, in a case where the maximum length is Lxy (Lx max or Ly max), the defect detection unit 73 compares the maximum length Lxy with the maximum layer length threshold value $\delta xy$. Then, in a case where it is determined that the maximum length Lxy is longer than the maximum layer length threshold value $\delta xy$, the defect detection unit 73 moves on to Step S28 and determines the merged defect candidate as a defect.

The defect detection method according to the fifth embodiment described above will be referred to as a "detection method 2".

In the first embodiment, the threshold value is unified to $\delta$ for the maximum length regardless of the XYZ directions. However, there is a high possibility that how the powder material is melted changes in the XY direction and in the Z direction. For example, how the powder is melted in the XY direction changes depending on the intensity of the electron beam, scanning motion in the XY direction, and the like. On the other hand, how the powder is melted in the Z direction changes depending on the depth of the electron beam in the stacking direction. Therefore, the defect detection unit 73 according to the fifth embodiment changes the threshold value to be compared for the two patterns of the case where the maximum length is obtained in the XY direction and the case where the maximum length is obtained in the Z direction using the detection method 2 and compares the maximum length in the XY direction and the maximum length in the Z direction with the threshold values with the respective threshold values. Therefore, it is possible to appropriately determine the defect candidate that may change depending on how the powder material is melted as a defect in the XY direction and the Z direction.

Note that the above-mentioned parameters $\alpha$, $\beta$, $\gamma$, $\delta z$, and $\delta xy$ may be changed every time PBF-AM is performed or may be fixed once determined. Also, parameter values may be changed depending on the type of powder to be used. Also, parameter values may be changed depending on the type of powder to be used for the PBF-AM processing.

[6. Sixth Embodiment]

Next, a defect detection method according to a sixth embodiment of the present invention will be described.

The defect detection method according to the sixth embodiment is performed using the three-dimensional PBF-AM apparatus 1 and the control unit 70 and the recording unit 80 in the PC 54 according to the first embodiment. In the defect detection method according to the sixth embodiment, the same processing as that in Step S1 in FIG. 4 to Step S25 in FIG. 12 according to the first embodiment is performed. The merged defect candidates are those illustrated in FIG. 15.

In the sixth embodiment, the defect detection unit 73 prepares a stacking direction length threshold value Lz_lim and a maximum layer length threshold value Lxy_lim to be used by the defect detection unit 73 to determine defects. These threshold values are recorded in the parameter recording unit 81. The defect detection unit 73 detects merged defect candidates as defects in a case where the stacking direction length Lz is equal to or greater than the stacking direction length threshold value Lz_lim and the maximum layer length Lxy is equal to or greater than the maximum layer length threshold value Lxy_lim. The merged defect candidates are those illustrated in FIG. 15.

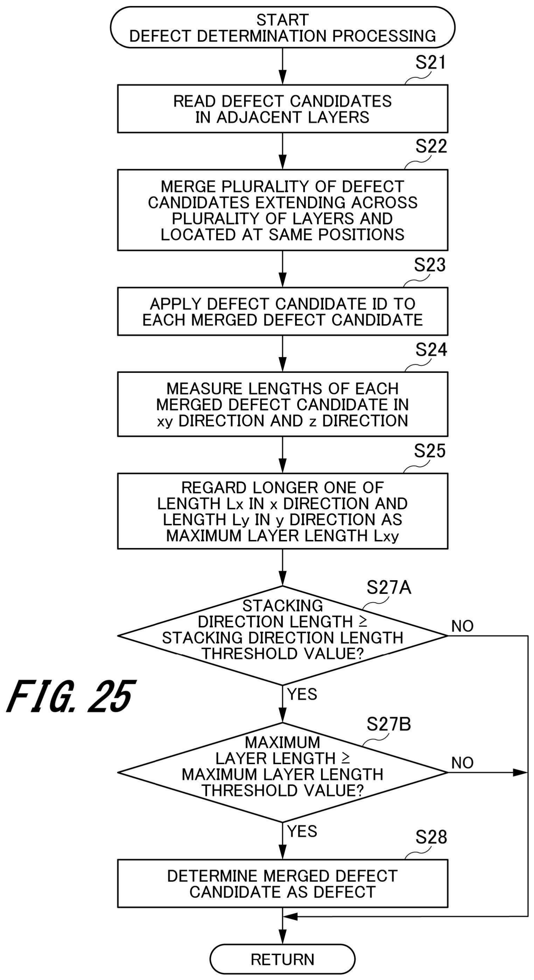

FIG. 25 is a flowchart illustrating an example of defect determination processing according to the sixth embodiment.

As described above, Steps S21 to S25 in FIG. 25 are the same processing as that in Steps S21 to S25 in FIG. 12, and detailed description thereof will thus be omitted. Note that in FIG. 25, Step S26 in FIG. 12 is deleted.

After Step S25, the defect detection unit 73 determines whether or not the length (referred to as the stacking direction length Lz) of each merged defect candidate in the Z direction as measured in Step S24 is equal to or greater than the stacking direction length threshold value Lz_lim read from the parameter recording unit 81 (S27A).

In a case where it is determined that the stacking direction length Lz is equal to or greater than the stacking direction length threshold value Lz_lim (YES in S27A), the defect detection unit 73 determines whether or not the maximum layer length Lxy of each merged defect candidate as calculated in Step S25 is equal to or greater than the maximum layer length threshold value Lxy_lim (S27B).

In a case where it is determined that the maximum layer length Lxy is equal to or greater than the maximum layer length threshold value Lxy_lim (YES in S27B), the defect detection unit 73 determines the merged defect candidate as a defect (S28) and moves on to the processing in Step S6 in FIG. 4.

On the other hand, in a case where it is determined that the stacking direction length Lz is not equal to or greater than the stacking direction length threshold value Lz_lim (NO in S27A), or in a case where it is determined that the maximum layer length Lxy is not equal to or greater than the maximum layer length threshold value Lxy_lim (NO in S27B), the defect detection unit 73 moves on to the processing in Step S6 in FIG. 4 without determining the merged defect candidate as a defect.

The defect detection method according to the sixth embodiment described above will be referred to as a "detection method 3". The detection method 3 is substantially the same as the detection method 1 according to the first embodiment. However, the detection method 3 is different from the detection method 1 in that the merged defect candidate is detected as a defect in the case where the stacking direction length Lz is equal to or greater than the stacking direction length threshold value Lz_lim and the maximum layer length Lxy is equal to or greater than the maximum layer length threshold value Lxy_lim.

Note that the stacking direction length threshold value Lz_lim and the maximum layer length threshold value Lxy_lim described above may be changed every time the PBF-AM is performed or may be fixed once determined. Also, parameter values may be changed depending on the type of powder to be used for the PBF-AM processing.

[7. Seventh Embodiment]

Next, a defect detection method according to a seventh embodiment of the present invention will be described.

The defect detection method according to the seventh embodiment is performed using the three-dimensional PBF-AM apparatus 1 and the control unit 70 and the recording unit 80 in the PC 54 according to the first embodiment. In the defect detection method according to the seventh embodiment, the same processing as that in Step S1 in FIG. 4 to Step S25 in FIG. 12 according to the first embodiment is performed.

In the seventh embodiment, the defect detection unit 73 prepares a stacking direction length threshold value Lz_lim and a maximum layer length threshold value Lxy_lim to be used by the defect detection unit 73 to determine defects. These threshold values are recorded in the parameter recording unit 81. The defect detection unit 73 detects merged defect candidates as defects in a case where the stacking direction length Lz is equal to or greater than the stacking direction length threshold value Lz_lim or in a case where the maximum layer length Lxy is equal to or greater than the maximum layer length threshold value Lxy_lim. The merged defect candidates are those illustrated in FIG. 15.

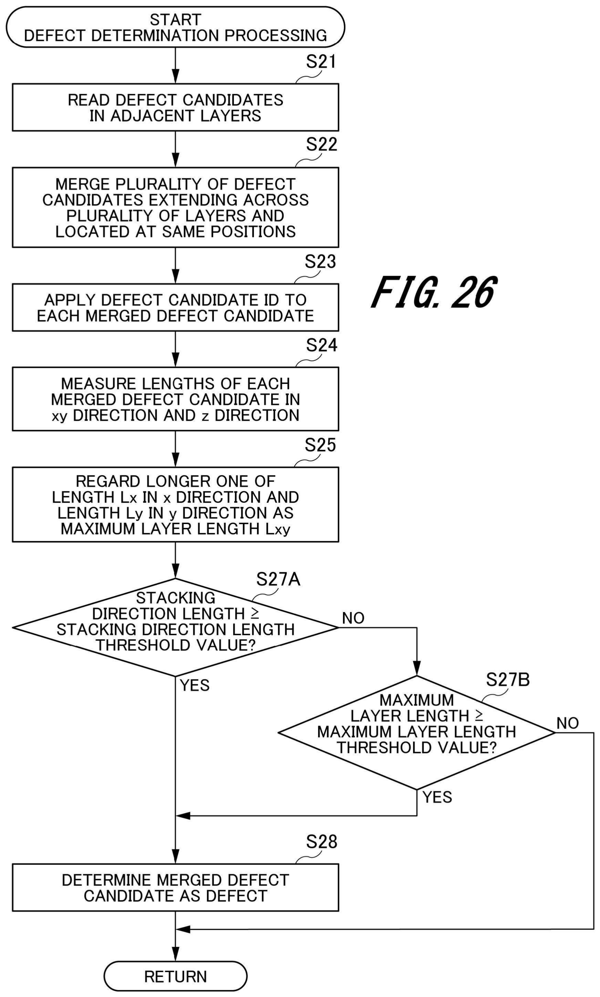

FIG. 26 is a flowchart illustrating an example of defect determination processing according to the seventh embodiment.

As described above, Steps S21 to S25 in FIG. 26 are the same processing as that in Steps S21 to S25 in FIG. 12, and detailed description thereof will thus be omitted. Note that in FIG. 26, Step S26 in FIG. 12 is deleted.

After Step S25, the defect detection unit 73 determines whether or not the length (referred to as the stacking direction length Lz) of each merged defect candidate in the Z direction as measured in Step S24 is equal to or greater than the stacking direction length threshold value Lz_lim read from the parameter recording unit 81 (S27A).

In a case where it is determined that the stacking direction length Lz is equal to or greater than the stacking direction length threshold value Lz_lim (YES in S27A), the defect detection unit 73 determines the merged defect candidate as a defect (S28) and moves on to the processing in Step S6 in FIG. 4.

On the other hand, in a case where it is determined that the stacking direction length Lz is not equal to or greater than the stacking direction length threshold value Lz_lim (NO in S27A), the defect detection unit 73 determines whether or not the maximum layer length Lxy of the merged defect candidate as calculated in Step S25 is equal to or greater than the maximum layer length threshold value Lxy_lim (S27B).

In a case where it is determined that the maximum layer length Lxy is equal to or greater than the maximum layer length threshold value Lxy_lim (YES in S27B), the defect detection unit 73 determines the merged defect candidate as a defect (S28) and moves on to the processing in Step S6 in FIG. 4.

On the other hand, in a case where it is determined that the maximum layer length Lxy is not equal to or greater than the maximum layer length threshold value Lxy_lim (NO in S27B), the defect detection unit 73 moves on to the processing in Step S6 in FIG. 4 without determining the merged defect candidate as a defect.

The defect detection method according to the seventh embodiment described above will be referred to as a "detection method 4". The detection method 4 is substantially the same as the detection method 1 according to the first embodiment. However, the detection method 4 is different from the detection method 1 in that the merged defect candidate is detected as a defect in the case where the stacking direction length Lz is equal to or greater than the stacking direction length threshold value Lz_lim or in a case where the maximum layer length Lxy is equal to or greater than the maximum layer length threshold value Lxy_lim.

Note that the stacking direction length threshold value Lz_lim and the maximum layer length threshold value Lxy_lim described above may be changed every time the PBF-AM is performed or may be fixed once determined. Also, parameter values may be changed depending on the type of powder to be used for the PBF-AM processing.

The shaping control unit 71 compares the defect state detected in the fifth to seventh embodiments with the threshold value of the allowable maximum defect length set on the setting screen 100 (FIG. 17). Then, in a case where the defect state exceeds the threshold value, the shaping control unit 71 executes the content of control in the shaping stop operation set on the setting screen 100 (S51 in FIG. 18, S51A in FIG. 19, or S51B in FIG. 20).

[8. Modifications]

Although various parameters are used in each embodiment described above, these parameters may be changed depending on layers. For example, four types of parameters $\alpha$, $\beta$, $\gamma$, and $\delta$ have been described in the first embodiment. Among these four types of parameters, the maximum length threshold value $\delta$ can be set to satisfy $\delta = 5$ for up to 100 to 200 layers, $\delta = 10$ for up to 201 to 300 layers, and the like. Appropriate values of these parameters may vary depending on the shapes of the shaped objects 38. In such a case, defect detection accuracy is expected to be further improved by changing these parameters depending on the layers.

Furthermore, the example in which the present invention is applied to the shaping control software dedicated for shaping that is used by a three-dimensional PBF-AM apparatus based on a powder bed scheme has been described in each of the above-described embodiments. However, it is not necessary to limit the shaping beam to the electron beam method, and the present invention may be applied to shaping control software for shaping apparatuses including other schemes as well as the laser scheme.

In addition, although each of the above-described embodiments has been described on the assumption that the specified defect candidates and the detected defects are displayed as a BSE image on the BSE monitor 55, the defect candidates and the BSE image may be displayed as a camera image captured by the camera 42.

Furthermore, since defect detection accuracy is enhanced by the detection method in each of the above-described embodiments, it is possible to omit a process of further performing an X-ray CT inspection on the shaped objects 38.

Note that the present invention is not limited to each of the above-described embodiments, and it is a matter of course that various other application examples and modifications can be adopted without departing from the present invention as claimed in the claims.

For example, each of the above-described embodiments describes the configurations of the three-dimensional PBF-AM apparatus 1 and the shaping control software for the PC 54 in a specific and detailed manner for clear explanation of the present invention, and the present invention is not necessarily limited to a configuration including all the described configurations. In addition, some of the configurations in the embodiments described hitherto can be replaced with configurations in other embodiments, and it is also possible to further add configurations in other embodiments to configurations in a certain embodiment. Moreover, addition of other configurations, deletion, or replacement can be made for some of the configurations in each embodiment.

In addition, control lines and information lines that are considered to be necessary for explanation have been described, and all control lines and information lines in a product are not necessarily illustrated. In practice, it may be considered that almost all the configurations are connected to each other.

Reference Signs List

| | |
|---|---|
| 1 | Three-dimensional PBF-AM apparatus |
| 2 | Beam irradiation device |
| 15 | Electron beam |
| 18 | Shaping table |
| 32 | Powder material |
| 35 | Presintered body |
| 38 | Shaped object |
| 42 | Camera |
| 46 | Detection unit |
| 54 | PC |

| | |
|---|---|
| 55 | BSE monitor |
| 60 | Input unit |
| 70 | Control unit |
| 71 | Shaping control unit |
| 72 | Defect candidate specifying unit |
| 73 | Defect detection unit |
| 74 | Display control unit |
| 80 | Recording unit |
| 81 | Parameter recording unit |
| 82 | Defect information recording unit |
| 90 | Display unit |
| 100 | Setting screen |

**Claims**

1. An information processing apparatus comprising:

   a defect candidate specifying unit (72) that detects failure locations having occurred in layers, by which PBF-AM of shaped objects is performed, as defect candidates for each of the layers and specifies the plurality of defect candidates located at substantially same positions in the plurality of layers that are adjacent in a stacking direction on the basis of layer data obtained for each of the layers;
   a defect detection unit (73) that detects defects remaining in the shaped objects on the basis of sizes of the plurality of defect candidates, which are located at substantially the same positions and are specified in the plurality of layers, in the stacking direction and the sizes thereof inside the layers; and
   a shaping control unit (71) that performs control to stop at least the PBF-AM of shaped objects from which the defects have been detected or to output a warning in a case where the sizes of the defects exceed a preset threshold value in a middle of the PBF-AM.

2. The information processing apparatus according to claim 1, wherein the shaping control unit (71) performs first control of stopping the PBF-AM of all the shaped objects.

3. The information processing apparatus according to claim 1, wherein the shaping control unit (71) performs second control of stopping the PBF-AM of the shaped objects from which the defects have been detected and continuing the PBF-AM of remaining shaped objects.

4. The information processing apparatus according to claim 1, wherein the shaping control unit (71) performs third control of outputting a warning indicating that the defects have been detected.

5. The information processing apparatus according to claim 1, comprising:

   a display control unit (74) that performs control to display, on a display unit, first control of stopping the PBF-AM of all the shaped objects, second control of stopping the PBF-AM of shaped objects from which the defects have been detected and continuing the PBF-AM of remaining shaped objects, and third control of outputting a warning indicating that the defects have been detected as options for shaping control in a case where the sizes of the defects exceed the preset threshold value in the middle of the PBF-AM,
   wherein the shaping control unit (71) executes control of the selected option.

6. The information processing apparatus according to any one of claims 1 and 3 to 5, wherein in a case where the PBF-AM of the remaining shaped objects except for the shaped objects, from which the defects have been detected, is continued, the shaping control unit (71) determines, for the remaining shaped objects, a melting order by repeating processing of designating, as a shaped object to be melted next, a shaped object that is the furthest from a shaped object that is to be melted for a first time after the PBF-AM is continued and designating, as a shaped object to be melted next, a shaped object that is the furthest from a shaped object that is melted immediately before from among shaped objects for which orders of melting have not been designated.

7. The information processing apparatus according to claim 1, further comprising:

   a display control unit (74) that performs control to generate a result table including, for each of the shaped objects, information regarding defects detected for each of the layers on the basis of the layer data and information including a progress of PBF-AM processing on the shaped objects such that the result table is able to be displayed on a display unit,

wherein the information including the progress of the PBF-AM processing includes either information indicating that the defects have occurred in the PBF-AM processing and information indicating that the PBF-AM processing has been performed normally.

8. The information processing apparatus according to claim 1, wherein the defect candidate specifying unit (72) measures an area of a defect candidate in an N-th layer (N is an integer that is equal to or greater than one) specified in the N-th layer and an area of a defect candidate in an N+1-th layer specified in the N+1-th layer from among the plurality of defect candidates overlapping in a plurality of layers that are adjacent in the stacking direction, calculates an overlapping area of an overlapping portion where the defect candidate in the N-th layer and the defect candidate in the N+1-th layer overlap in the stacking direction, and specifies that the defect candidate in the N-th layer and the defect candidate in the N+1-th layer are located at substantially the same position in a case where a ratio of the overlapping area to the area of the defect candidate in the N-th layer is same as or exceeds a first area threshold value and a ratio of the overlapping area to the area of the defect candidate in the N+1-th layer is same as or exceeds a second area threshold value.

9. The information processing apparatus according to claim 8, wherein the defect detection unit (73) merges the plurality of defect candidates determined to be located at substantially the same position in the stacking direction, measures a stacking direction length (Lz) of the merged defect candidate and a first direction length (Lx) and a second direction length (Ly) inside the layers intersecting the stacking direction of the merged defect candidate for each of the layers, and regards a maximum length out of the first direction length (Lx) and the second direction length (Ly) as a maximum layer length (Lxy).

10. The information processing apparatus according to claim 9, wherein the defect detection unit (73) prepares a maximum length threshold value in the stacking direction and a maximum layer length threshold value inside the layers and detects the merged defect candidate as the defect in a case where the stacking direction length (Lz) of the merged defect candidate is equal to or greater than the maximum length threshold value in the stacking direction and the maximum layer length (Lxy) inside the layers of the merged defect candidate is equal to or greater than the maximum layer length threshold value.

11. The information processing apparatus according to claim 9, wherein the defect detection unit (73) prepares a maximum length threshold value in the stacking direction and a maximum layer length threshold value inside the layers and detects the merged defect candidate as the defect in a case where the stacking direction length (Lz) of the merged defect candidate is equal to or greater than the maximum length threshold value in the stacking direction or the maximum layer length (Lxy) inside the layers of the merged defect candidate is equal to or greater than the maximum layer length threshold value.

12. A defect detection method performed by a defect candidate specifying unit (72), a defect detection unit (73), and a shaping control unit (71) included in an information processing apparatus, the method comprising:

by the defect candidate specifying unit (72), detecting failure locations having occurred in layers, by which PBF-AM of shaped objects is performed, as defect candidates for each of the layers and specifying the plurality of defect candidates located at substantially same positions in the plurality of layers that are adjacent in a stacking direction on the basis of layer data obtained for each of the layers;

by the defect detection unit (73), detecting defects remaining in the shaped objects on the basis of sizes of the plurality of defect candidates, which are located at substantially the same positions and are specified in the plurality of layers, in the stacking direction and the sizes thereof inside the layers; and

by the shaping control unit (71), performing control to stop at least the PBF-AM of shaped objects from which the defects have been detected or to output a warning in a case where the sizes of the defects exceed a preset threshold value in a middle of the PBF-AM.

13. A three-dimensional PBF-AM apparatus comprising:

a shaping plate (22) on which a powder bed to spread a powder material thereon is formed;
a powder supply system (16) that spreads the powder material on the powder bed;
a beam irradiation unit (2) that irradiates the powder material spread on the powder bed with a shaping beam;

an electron optical system that performs scanning with the shaping beam in accordance with melting conditions for melting the powder material and melting the powder material spread on the powder bed;

a defect candidate specifying unit (72) that detects failure locations having occurred in layers, by which PBF-AM of shaped objects is performed, as defect candidates for each of the layers and specifies the plurality of defect candidates located at substantially same positions in the plurality of layers that are adjacent in a stacking direction on the basis of layer data obtained for each of the layers;

a defect detection unit (73) that detects defects remaining in the shaped objects on the basis of sizes of the plurality of defect candidates, which are located at substantially the same positions and are specified in the plurality of layers, in the stacking direction and the sizes thereof inside the layers; and

a shaping control unit (71) that performs control to stop at least the PBF-AM of shaped objects from which the defects have been detected or to output a warning in a case where the sizes of the defects exceed a preset threshold value in a middle of the PBF-AM.

FIG. 1

FIG. 2

## FIG. 3

1

```
┌─────────────────────┐
│   60  INPUT UNIT     │
└─────────────────────┘

54
PC(SHAPING CONTROL SOFTWARE)

┌──────────────────────────┐   ┌──────────────────────────┐
│  70  CONTROL UNIT        │   │  80  RECORDING UNIT      │
│                          │   │                          │
│  ┌────────────────────┐  │   │   ┌───────────────────┐  │
│  │ 71 SHAPING         │  │   │   │ 81 PARAMETER      │  │
│  │    CONTROL UNIT    │  │   │   │    RECORDING      │  │
│  └────────────────────┘  │   │   │    UNIT           │  │
│                          │   │   └───────────────────┘  │
│  ┌────────────────────┐  │   │                          │
│  │ 72 DEFECT CANDIDATE│  │   │   ┌───────────────────┐  │
│  │    SPECIFYING UNIT │  │   │   │ 82 DEFECT         │  │
│  └────────────────────┘  │   │   │    INFORMATION    │  │
│                          │   │   │    RECORDING UNIT │  │
│  ┌────────────────────┐  │   │   └───────────────────┘  │
│  │ 73 DEFECT          │  │   │                          │
│  │    DETECTION UNIT  │  │   │                          │
│  └────────────────────┘  │   │                          │
│                          │   │                          │
│  ┌────────────────────┐  │   │                          │
│  │ 74 DISPLAY         │  │   │                          │
│  │    CONTROL UNIT    │  │   │                          │
│  └────────────────────┘  │   │                          │
└──────────────────────────┘   └──────────────────────────┘

┌─────────────────────┐
│  90  DISPLAY UNIT   │
└─────────────────────┘
```

33

START
DEFECT DETECTION PROCESSING

S1

m←m+1 (INITIAL VALUE 0 OF m)

S2

PERFORM PBF-AM PROCESSING
ON m-TH LAYER

S3

HAS PBF-AM OF
PLURALITY OF LAYERS BEEN
COMPLETED?

NO

YES

*FIG. 4*

S4

PERFORM DEFECT CANDIDATE
SPECIFYING PROCESSING

S5

PERFORM DEFECT
DETERMINATION PROCESSING

S6

HAS THERE
BEEN USER'S INPUT
OPERATION?

NO

YES

S7

PERFORM DISPLAY
CONTROL PROCESSING

S8

HAS PBF-AM
OF LAST LAYER BEEN
COMPLETED?

NO

YES

END

START
DEFECT CANDIDATE
SPECIFYING PROCESSING

S11

MEASURE AREAS OF TWO DEFECT
CANDIDATES WITH AT LEAST PARTIALLY
OVERLAPPING XY SECTIONS

*FIG. 5*

S12

CALCULATE AREA PROPORTIONS OF
TWO DEFECT CANDIDATES AND AREA
PROPORTION OF OVERLAPPING PORTION

S13

ARE CONDITIONS
OF AREA PROPORTIONS
RA AND RB AND PARAMETERS
$\alpha$ AND $\beta$ SATISFIED?

NO

YES

S15

ARE CONDITIONS
OF AREA PROPORTIONS
RA AND RB AND PARAMETER
$\gamma$ SATISFIED?

YES

NO

S14

SPECIFY THAT TWO DEFECT CANDIDATES
ARE LOCATED AT SAME POSITION
(POSITION DEFINITION 1)

S16

RECORD POSITIONS AND SIZES
OF DEFECT CANDIDATES
AS DEFECT INFORMATION

RETURN

## FIG. 6

## FIG. 7

*FIG. 8*

DEFECT CANDIDATE A

N-TH
LAYER

AREA SA

Y

X

*FIG. 9*

DEFECT CANDIDATE B

N+1-TH
LAYER

AREA SB

Y

X

OVERLAPPING
PORTION AB

DEFECT
CANDIDATE B

*FIG. 10*

DEFECT
CANDIDATE A

AREA SB

OVERLAPPING
BETWEEN
N-TH LAYER
AND
N+1-TH LAYER

AREA SAB

AREA SA

Y

X

DEFECT
CANDIDATE B
(AREA SB)

DEFECT
CANDIDATE A

*FIG. 11*

OVERLAPPING
BETWEEN
N-TH LAYER
AND
N+1-TH LAYER

AREA SA

Y

X

START
DEFECT DETERMINATION PROCESSING

S21
READ DEFECT CANDIDATES
IN ADJACENT LAYERS

S22
MERGE PLURALITY OF DEFECT
CANDIDATES EXTENDING ACROSS
PLURALITY OF LAYERS AND
LOCATED AT SAME POSITIONS

S23
APPLY DEFECT CANDIDATE ID TO
EACH MERGED DEFECT CANDIDATE

S24
MEASURE LENGTHS OF EACH
MERGED DEFECT CANDIDATE
IN xy DIRECTION AND z DIRECTION

S25
REGARD LONGER ONE OF
LENGTH Lx IN x DIRECTION AND
LENGTH Ly IN y DIRECTION
AS MAXIMUM LAYER LENGTH Lxy

S26
REGARD LONGER ONE OF
LENGTH Lz IN z DIRECTION
AND MAXIMUM LAYER LENGTH Lxy
AS MAXIMUM LENGTH

FIG. 12

S27
MAXIMUM LENGTH >
MAXIMUM LENGTH THRESHOLD
VALUE $\delta$ ?

NO

YES

S28
DETERMINE MERGED DEFECT
CANDIDATE AS DEFECT

RETURN

39

## FIG. 13

z DIRECTION

N+7-TH LAYER
N+6-TH LAYER
N+5-TH LAYER
N+4-TH LAYER
N+3-TH LAYER
N+2-TH LAYER
N+1-TH LAYER
N-TH LAYER

x DIRECTION

## FIG. 14

z DIRECTION

ID4
ID2
ID3
ID1

N+7-TH LAYER
N+6-TH LAYER
N+5-TH LAYER
N+4-TH LAYER
N+3-TH LAYER
N+2-TH LAYER
N+1-TH LAYER
N-TH LAYER

x DIRECTION

# FIG. 15

*FIG. 16*

```
        START
DISPLAY CONTROL PROCESSING

                              S31
RECEIVE USER'S INPUT OPERATION

                              S32
    READ DEFECT CANDIDATES
    AND DEFECT INFORMATION
IN RESPONSE TO INPUT OPERATION

                              S33
   EDIT IMAGE OBTAINED BY
VISUALIZING DEFECT CANDIDATES
   AND DEFECT INFORMATION

                              S34
      OUTPUT VISUALIZED
   IMAGE TO DISPLAY UNIT

        RETURN
```

100

| ALLOWABLE MAXIMUM DEFECT LENGTH [um] | 400 ▼ |
| ALLOWABLE VOLUME DEFECT RATE [%] | |
| SHAPING STOP OPERATION | All Stop ▼ |
| | Parts Stop |
| | Warning |

*FIG. 17*

EP 4 741 084 A1

# FIG. 18

START
SHAPING CONTROL PROCESSING

S41
RAISE TEMPERATURE
OF SHAPING PLATE

S42
PERFORM RECOATING

S43
PERFORM POWDER-HEAT (P.H.)

S44
PERFORM MELTING

S45
ACQUIRE BSE IMAGE

S46
PERFORM AFTER-HEAT (A.H.)

S48
PERFORM DEFECT
DETECTION PROCESSING

S47
LOWER SHAPING PLATE BY
AMOUNT CORRESPONDING
TO ONE LAYER IN Z DIRECTION

S49
HAVE DETECTED
DEFECTS EXCEEDED
THRESHOLD VALUE?
YES
NO

S51
STOP ENTIRE SHAPING

S50
HAS SHAPING
UP TO LAST LAYER BEEN
PERFORMED?
NO
YES

END
(COMPLETE SHAPING)

44

*FIG. 19*

```
         ┌─────────────────────────────┐
         │           START             │
         │  SHAPING CONTROL PROCESSING │
         └──────────────┬──────────────┘
                        │            S41
         ┌──────────────▼──────────────┐
         │  RAISE TEMPERATURE OF       │
         │      SHAPING PLATE          │
         └──────────────┬──────────────┘
                        │            S42
         ┌──────────────▼──────────────┐
         │     PERFORM RECOATING       │
         └──────────────┬──────────────┘
                        │            S43
         ┌──────────────▼──────────────┐
         │  PERFORM POWDER-HEAT (P.H.) │
         └──────────────┬──────────────┘
                        │            S44A
         ┌──────────────▼──────────────┐
         │      PERFORM MELTING        │
         │  SHAPED OBJECTS IN WHICH    │
         │  DEFECT STATES EXCEED       │
         │  THRESHOLD VALUE ARE NOT    │
         │  MELTED                     │
         │  SHAPED OBJECTS IN WHICH    │
         │  DEFECT STATES DO NOT       │
         │  EXCEED THRESHOLD VALUE     │
         │  ARE MELTED                 │
         └──────────────┬──────────────┘
                        │            S45
         ┌──────────────▼──────────────┐
         │     ACQUIRE BSE IMAGE       │
         └──────────────┬──────────────┘
                        │            S46                      S48
         ┌──────────────▼──────────────┐    ┌─────────────────────────┐
         │ PERFORM AFTER-HEAT (A.H.)   │    │    PERFORM DEFECT       │
         └──────────────┬──────────────┘    │ DETECTION PROCESSING    │
                        │            S47     └─────────────────────────┘
         ┌──────────────▼──────────────┐
         │    LOWER SHAPING PLATE      │
         │  BY AMOUNT CORRESPONDING    │
         │  TO ONE LAYER IN Z DIRECTION│
         └──────────────┬──────────────┘
                        │            S49
                     ◇──────◇  YES
                  HAVE DETECTED ─────────────────┐
                  DEFECTS EXCEEDED                │        S51A
                  THRESHOLD VALUE?                │
                     ◇──────◇           ┌─────────▼─────────────────┐
                        │ NO            │ STOP SHAPING OF SHAPED    │
                        │               │ OBJECTS IN WHICH DEFECT   │
                        │               │ STATES EXCEED THRESHOLD   │
                        │               │ VALUE AND CONTINUE        │
                        │               │ SHAPING OF SHAPED OBJECTS │
                        │               │ IN WHICH DEFECT STATES    │
                        │               │ DO NOT EXCEED THRESHOLD   │
                        │               │ VALUE                     │
                        │               └───────────┬───────────────┘
                        │◄──────────────────────────┘
                        │            S50
          NO         ◇──────◇
         ┌───────── HAS SHAPING
         │          UP TO LAST LAYER BEEN
         │          PERFORMED?
         │            ◇──────◇
         │               │ YES
         │     ┌─────────▼─────────┐
         │     │       END         │
         │     │ (COMPLETE SHAPING)│
         │     └───────────────────┘
```

**FIG. 20**

```
        ┌─────────────────────────────┐
        │           START             │
        │  SHAPING CONTROL PROCESSING │
        └─────────────┬───────────────┘
                      │                    S41
        ┌─────────────▼───────────────┐
        │     RAISE TEMPERATURE       │
        │     OF SHAPING PLATE        │
        └─────────────┬───────────────┘
                      │                    S42
        ┌─────────────▼───────────────┐
        │      PERFORM RECOATING      │
        └─────────────┬───────────────┘
                      │                    S43
        ┌─────────────▼───────────────┐
        │ PERFORM POWDER-HEAT (P.H.)  │
        └─────────────┬───────────────┘
                      │                    S44
        ┌─────────────▼───────────────┐
        │      PERFORM MELTING        │
        └─────────────┬───────────────┘
                      │                    S45
        ┌─────────────▼───────────────┐
        │      ACQUIRE BSE IMAGE      │
        └─────────────┬───────────────┘
                      │                    S46                         S48
        ┌─────────────▼───────────────┐      ┌──────────────────────────┐
        │ PERFORM AFTER-HEAT (A.H.)   │      │    PERFORM DEFECT        │
        └─────────────┬───────────────┘      │ DETECTION PROCESSING     │
                      │                    S47 └──────────────────────────┘
        ┌─────────────▼───────────────┐
        │    LOWER SHAPING PLATE      │
        │  BY AMOUNT CORRESPONDING    │
        │ TO ONE LAYER IN Z DIRECTION │
        └─────────────┬───────────────┘
                      │                    S49
                 ◇────▼────◇
                /  HAVE DETECTED  \        YES
               <  DEFECTS EXCEEDED >──────────────┐
                \ THRESHOLD VALUE? /              │       S51B
                 ◇────┬────◇                ┌─────▼──────────────────┐
                      │ NO                  │ DISPLAY WARNING MESSAGE │
                      │                     └─────────────┬──────────┘
                      │◄──────────────────────────────────┘
                      │                    S50
                 ◇────▼────◇
         NO     /  HAS SHAPING    \
        ◄──────<  UP TO LAST LAYER BEEN >
                \   PERFORMED?    /
                 ◇────┬────◇
                      │ YES
        ┌─────────────▼───────────────┐
        │           END               │
        │    (COMPLETE SHAPING)       │
        └─────────────────────────────┘
```

110

| | Part Name | VOLUME OF EACH PART [mm^3] | VOLUME DEFECT RATE [%] | NUMBER OF DEFECTS | MAXIMUM DEFECT LENGTH [um] | DETERMINATION RESULT |
|---|---|---|---|---|---|---|
| 7 | Parts A | 247.513 | 0.170 | 2 | 849@I206 | BAD |
| 8 | Parts B | 259.478 | 0.000 | 0 | 0 | GOOD |
| 9 | Parts C | 510.000 | 0.000 | 0 | 0 | GOOD |

# FIG. 21

*FIG. 22*

*FIG. 23*

FIG. 24

START
DEFECT DETERMINATION PROCESSING

S21

READ DEFECT CANDIDATES
IN ADJACENT LAYERS

S22

MERGE PLURALITY OF DEFECT
CANDIDATES EXTENDING ACROSS
PLURALITY OF LAYERS AND
LOCATED AT SAME POSITIONS

S23

APPLY DEFECT CANDIDATE ID TO
EACH MERGED DEFECT CANDIDATE

S24

MEASURE LENGTHS OF EACH
MERGED DEFECT CANDIDATE IN
xy DIRECTION AND z DIRECTION

S25

REGARD LONGER ONE OF
LENGTH Lx IN x DIRECTION AND
LENGTH Ly IN y DIRECTION AS
MAXIMUM LAYER LENGTH Lxy

S27A

STACKING
DIRECTION LENGTH ≥
STACKING DIRECTION LENGTH
THRESHOLD VALUE? —— NO

*FIG. 25*

YES

S27B

MAXIMUM
LAYER LENGTH ≥
MAXIMUM LAYER LENGTH
THRESHOLD VALUE? —— NO

YES

S28

DETERMINE MERGED DEFECT
CANDIDATE AS DEFECT

RETURN

START
DEFECT DETERMINATION PROCESSING

S21

READ DEFECT CANDIDATES
IN ADJACENT LAYERS

S22

MERGE PLURALITY OF DEFECT
CANDIDATES EXTENDING ACROSS
PLURALITY OF LAYERS AND
LOCATED AT SAME POSITIONS

S23

*FIG. 26*

APPLY DEFECT CANDIDATE ID TO
EACH MERGED DEFECT CANDIDATE

S24

MEASURE LENGTHS OF EACH
MERGED DEFECT CANDIDATE IN
xy DIRECTION AND z DIRECTION

S25

REGARD LONGER ONE OF
LENGTH Lx IN x DIRECTION AND
LENGTH Ly IN y DIRECTION AS
MAXIMUM LAYER LENGTH Lxy

S27A

STACKING
DIRECTION LENGTH ≥
STACKING DIRECTION LENGTH
THRESHOLD VALUE?

NO

YES

S27B

MAXIMUM
LAYER LENGTH ≥
MAXIMUM LAYER LENGTH
THRESHOLD VALUE?

NO

YES

S28

DETERMINE MERGED DEFECT
CANDIDATE AS DEFECT

RETURN

51

Europäisches
Patentamt

European
Patent Office

Office européen
des brevets

# EUROPEAN SEARCH REPORT

**Application Number**

EP 25 21 5362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/324175 A1 (MORIMATSU DAISUKE [JP] ET AL) 13 October 2022 (2022-10-13) | 1,12,13 | INV. |
| Y | * paragraphs [0002], [0033]; claims 1-19,24; figures 2-5,8,12 * | 2-11 | B22F10/28 |
| | * paragraphs [0061], [0086], [0131], [0135], [0136]; figure 4 * | | B22F10/38 |
| | * paragraphs [0116] - [0122]; figure 7 * | | B22F10/85 |
| | * paragraph [0172]; figure 12 * | | B22F12/41 |
| | ----- | | B22F12/90 |
| Y | US 2015/165683 A1 (CHEVERTON MARK ALLEN [US] ET AL) 18 June 2015 (2015-06-18) | 2-5,7 | B33Y10/00 |
| | * paragraphs [0034] - [0035], [0069], [0073]; figure 4 * | | B33Y30/00 |
| | ----- | | B33Y50/02 |
| | | | G06T7/00 |
| | | | G06T7/174 |
| | | | G06T7/507 |
| Y | US 2013/301927 A1 (CLIFTON DAVID [GB] ET AL) 14 November 2013 (2013-11-14) | 8-11 | |
| | * paragraphs [0058] - [0066], [0078]; figures 1-4 * | | ADD. |
| | ----- | | B33Y80/00 |
| | | | B29C64/153 |
| Y | EP 3 950 180 A1 (SIEMENS ENERGY GLOBAL GMBH & CO KG [DE]) 9 February 2022 (2022-02-09) | 8-11 | B29C64/393 |
| | | | B22F10/80 |
| | * paragraphs [0003], [0072] - [0087]; claims 6-9 * | | **TECHNICAL FIELDS SEARCHED (IPC)** |
| | ----- | | B33Y |
| Y | US 2015/086409 A1 (HELLESTAM CALLE [SE]) 26 March 2015 (2015-03-26) | 6 | B22F |
| | * claims 1-7); figures 1-3,8 * | | G05B |
| | ----- | | B29C |
| | -/-- | | B23K |
| | | | G06T |

The present search report has been drawn up for all claims

| Place of search | Date of completion of the search | Examiner |
|---|---|---|
| The Hague | 27 March 2026 | Aliouane, Nadir |

EPO FORM 1503 03.82 (P04C01)

Europäisches
Patentamt

European
Patent Office

Office européen
des brevets

# EUROPEAN SEARCH REPORT

**Application Number**

EP 25 21 5362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RENNER JAKOB ET AL: "In situ build surface topography determination in electron beam powder bed fusion", PROGRESS IN ADDITIVE MANUFACTURING, vol. 9, no. 5, 7 May 2024 (2024-05-07), pages 1537-1553, XP093380664, DE ISSN: 2363-9512, DOI: 10.1007/s40964-024-00621-0 * abstract; figures 1-2 * * section 2.3 * * section 4.3; figures 6-8 * | 1-13 | |
| A | MIRELES JORGE ET AL: "Closed-loop automatic feedback control in electron beam melting", THE INTERNATIONAL JOURNAL OF ADVANCED MANUFACTURING TECHNOLOGY SPRINGER, LONDON, vol. 78, no. 5, 7 January 2015 (2015-01-07), pages 1193-1199, XP035491751, ISSN: 0268-3768, DOI: 10.1007/S00170-014-6708-4 [retrieved on 2015-01-07] * abstract; figures 1-2,6 * * section 3; page 1195 - page 1197 * | 1-13 | **TECHNICAL FIELDS SEARCHED (IPC)** |
| A | JP 2023 181933 A (HITACHI LTD) 25 December 2023 (2023-12-25) * paragraphs [0017], [0026] - [0027], [0032], [0050] - [0051], [0061]; claims 1-15; figures 1-3 * * paragraphs [0022] - [0047], [0055], [0076], [0082] * | 1-13 | |

-/--

The present search report has been drawn up for all claims

| Place of search | Date of completion of the search | Examiner |
|---|---|---|
| The Hague | 27 March 2026 | Aliouane, Nadir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/308153 A1 (LJUNGBLAD ULRIC [SE]) 16 October 2014 (2014-10-16) * claims 14-17; figures 1-3 * ----- | 1-13 | |
| | | | TECHNICAL FIELDS SEARCHED (IPC) |

The present search report has been drawn up for all claims

| Place of search | Date of completion of the search | Examiner |
|---|---|---|
| The Hague | 27 March 2026 | Aliouane, Nadir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 25 21 5362

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | Publication date | Patent family member(s) | Publication date |
|---|---|---|---|
| US 2022324175 A1 | 13-10-2022 | CN 114450584 A | 06-05-2022 |
| | | DE 112020004392 T5 | 02-06-2022 |
| | | JP 7572362 B2 | 23-10-2024 |
| | | JP WO2021054127 A1 | 25-03-2021 |
| | | US 2022324175 A1 | 13-10-2022 |
| | | WO 2021054127 A1 | 25-03-2021 |
| US 2015165683 A1 | 18-06-2015 | NONE | |
| US 2013301927 A1 | 14-11-2013 | CN 103339929 A | 02-10-2013 |
| | | EP 2647194 A1 | 09-10-2013 |
| | | JP 6139002 B2 | 31-05-2017 |
| | | JP 2013546084 A | 26-12-2013 |
| | | JP 2016185337 A | 27-10-2016 |
| | | US 2013301927 A1 | 14-11-2013 |
| | | WO 2012072995 A1 | 07-06-2012 |
| EP 3950180 A1 | 09-02-2022 | CN 116075381 A | 05-05-2023 |
| | | EP 3950180 A1 | 09-02-2022 |
| | | EP 4142969 A1 | 08-03-2023 |
| | | US 2024239049 A1 | 18-07-2024 |
| | | WO 2022028753 A1 | 10-02-2022 |
| US 2015086409 A1 | 26-03-2015 | CN 105579166 A | 11-05-2016 |
| | | CN 113172238 A | 27-07-2021 |
| | | EP 3046702 A1 | 27-07-2016 |
| | | JP 6438032 B2 | 12-12-2018 |
| | | JP 2017500233 A | 05-01-2017 |
| | | US 2015086409 A1 | 26-03-2015 |
| | | US 2015088295 A1 | 26-03-2015 |
| | | US 2017246684 A1 | 31-08-2017 |
| | | US 2017246685 A1 | 31-08-2017 |
| JP 2023181933 A | 25-12-2023 | DE 112023000895 T5 | 05-12-2024 |
| | | JP 2023181933 A | 25-12-2023 |
| | | WO 2023243403 A1 | 21-12-2023 |
| US 2014308153 A1 | 16-10-2014 | CN 104023948 A | 03-09-2014 |
| | | EP 2797730 A1 | 05-11-2014 |
| | | US 2014308153 A1 | 16-10-2014 |
| | | US 2019039139 A1 | 07-02-2019 |
| | | US 2019039140 A1 | 07-02-2019 |
| | | WO 2013098054 A1 | 04-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020200501 A